Europäisches Patentamt

European Patent Office

Office européen des brevets

(19)

(11) **EP 1 514 917 A1**

(12) **EUROPEAN PATENT APPLICATION**
published in accordance with Art. 158(3) EPC

(43) Date of publication:
**16.03.2005 Bulletin 2005/11**

(51) Int Cl.$^7$: **C10G 25/00**, C10G 67/06,
B01J 20/20

(21) Application number: **03733022.2**

(22) Date of filing: **21.05.2003**

(86) International application number:
**PCT/JP2003/006336**

(87) International publication number:
**WO 2003/097771 (27.11.2003 Gazette 2003/48)**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **22.05.2002 JP 2002147618
21.02.2003 JP 2003044257**

(71) Applicant: **JAPAN ENERGY CORPORATION
Tokyo 105-0001 (JP)**

(72) Inventor: **TOIDA, Yasuhiro,
JAPAN ENERGY CORPORATION
Toda-shi, Saitama 335-8502 (JP)**

(74) Representative: **Koepe, Gerd L., Dipl.-Chem.
Koepe & Partner,
Robert-Koch-Strasse 1
80538 München (DE)**

(54) **ADSORPTION DESULFURIZATION AGENT FOR DESULFURIZING PETROLEUM FRACTION AND DESULFURIZATION METHOD USING THE SAME**

(57) A desulfurization method for a gas oil which includes a step of removing sulfur compounds contained in a gas oil distillate product by the adsorption with an adsorptive desulfurization agent formed of a fibrous active carbon and provided in an adsorption tower (1), and a desorption regeneration step of washing the used adsorptive desulfurization agent with an aromatic solvent to regenerate the desulfurization agent. The method allows the production of gas oil being satisfactorily freed of sulfur content at relatively low equipment and operation costs over a long period of time, and in the method, difficult-to-remove sulfur compounds, such as 4, 6-DM-DBT, and polycyclic aromatic compounds having two or more rings are selectively removed.

Fig. 1

EP 1 514 917 A1

**Description**

TECHNICAL FIELD

The present invention relates to an adsorptive desulfurization agent for adsorbing and removing sulfur compounds contained in petroleum distillate products, especially gas oil distillate products to be used as petroleum-based liquid fuel oils. The present invention also relates to a method for producing gas oil by using the adsorptive desulfurization agent, and the gas oil produced by the production method.

BACKGROUND ART

In the 21st century, it is demanded to further reduce the sulfur content contained in the fuel in view of the both viewpoints, i.e., the reduction of the discharge of the $CO_2$ gas as the global warming gas and the reduction of the automobile exhaust gas such as NOx in consideration of the environmental problem. It is postulated that the sulfur content contained in gasoline and gas oil may be regulated to be not more than 10 ppm in near future. Further, any petroleum-based liquid fuel oil, which has a lower sulfur content, may be possibly demanded as a result of the widespread use of the fuel cell for automobiles or the like which carry the fuel cell of the onboard reforming type. Therefore, at present, the desulfurization technique, which is required to obtain any petroleum-based fuel oil having an extremely low sulfur content, is vigorously investigated at present.

The method, which has been hitherto used as the desulfurization technique for the gas oil, includes the hydrodesulfurization method. However, in order that the gas oil is desulfurized to have a low sulfur concentration of not more than 15 ppm by using the hydrodesulfurization method, it is necessary to raise the reaction temperature. If the reaction temperature is raised, a problem arises such that the color of the gas oil product is deteriorated. A method has been suggested as a method for improving the color of the gas oil, in which the gas oil distillate products having the deteriorated color are brought into contact with activated carbon (see, for example, Japanese Patent Application Laid-open No. 6-136370, pp. 1-2 and Japanese Patent Application Laid-open No. 2000-192054, pp. 3-6). Further, a method has been also suggested, in which the gas oil is discolored by performing a hydrogenation process in the presence of an activated carbon catalyst or a crystalline alumino acid-containing inorganic oxide catalyst carried with any one of or both of Group VI metal and Group III metal (see, for example, Japanese Patent Application Laid-open No. 2000-282059, pp. 2-4).

A variety of processes have been also developed in relation to the desulfurization technique based on those other than the hydrodesulfurization method. For example, an exemplary technique is known, in which sulfur compound-adsorbing agent containing a copper component carried on an alumina carrier is used in order to remove a minute amount of sulfur compounds contained in the hydrocarbon oil (see, for example, Japanese Patent No. 3324746, pp. 2-4).

In order that the sulfur content is made to be not more than 15 ppm by removing the compounds such as 4-methylbenzothiophene (4-MDBT) and 4,6-dimethylbenzothiophene (4,6-DMDBT) which remain in the gas oil distillate products and which are difficult to be desulfurized by the hydrodesulfurization method, it is necessary to use huge amounts of catalyst and hydrogen. In particular, the hydrogen is expensive, which affects the price of the refined gas oil. Various processes have been studied in relation to the desulfurization for the gas oil distillate products. However, such processes are still at the bench scale apparatus level. In the present circumstances, it is inevitable to additionally add any reactor in response to such processes. Therefore, in order to realize the low sulfur content of the gas oil distillate products, it is demanded to bring about an innovative technique which makes it possible to effect the desulfurization with simple and convenient equipment at low running cost.

Recently, a technique is also required to reduce the polycyclic aromatic hydrocarbon chemicals (PAH'S) contained in the exhaust gas from diesel engines. That is, the gas oil, which contains extremely small amounts of the sulfur content and PAH'S, potentially has a possibility to make great contribution to the society in view of the prevention of the atmospheric pollution in big cities and the protection of the global environment.

DISCLOSURE OF THE INVENTION

The present invention solves the problems involved in the conventional technique described above, a first object of which is to provide an adsorptive desulfurization agent and a method for desulfurizing petroleum distillate products using the adsorptive desulfurization agent which make it possible to remove the sulfur content from the petroleum distillate products sufficiently and especially to be not more than 10 ppm at relatively low equipment cost and running cost. A second object of the present invention is to provide a method for producing gas oil in which not only the sulfur content but also PAH'S are reduced. A third object of the present invention is to provide an adsorptive desulfurization agent and a method for producing gas oil using the same which make it possible to selectively remove

**EP 1 514 917 A1**

sulfur compounds such as 4,6-DMDBT difficult to be desulfurized from petroleum distillate products.

According to a first aspect of the present invention, there is provided an adsorptive desulfurization agent comprising a carbon material having a specific surface area of not less than 500 m$^2$/g, wherein organic sulfur compounds, which are contained in petroleum distillate products, are adsorbed by the adsorptive desulfurization agent.

The inventors have used the adsorptive desulfurization agent composed of the carbon material having the specific surface area of not less than 500 m$^2$/g in place of the hydrodesulfurization catalyst in the desulfurization process for petroleum distillate products. Accordingly, the compounds such as 4,6-DMDBT, which are hardly desulfurized, are selectively removed. As a result, the inventors have successfully lowered the sulfur content in the petroleum distillate products to an extremely low level, i.e., not more than 10 ppm. Further, the inventors have found out the fact that the adsorptive desulfurization agent of the present invention makes it possible to remarkably lower the PAH'S concentration in the petroleum distillate products by selectively adsorbing PAH'S.

In the adsorptive desulfurization agent of the present invention, it is preferable that activated carbon fiber having a specific surface area of not less than 1,000 m$^2$/g and especially 2,000 m$^2$/g and an average length of not less than 100 μm and more preferably not less than 1 mm is used as the carbon material. When the activated carbon fiber is used for the adsorptive desulfurization agent, it is possible to further increase the adsorption capacity, because the activated carbon fiber has pores extended in the radial directions of the fiber. In particular, the activated carbon fiber, in which a large amount of mesopores having pore diameters of not less than 10 angstroms is presented, is preferably used, because the adsorption speed is high. The adsorptive desulfurization according to the present invention is principally based on the physical adsorption. Therefore, the adsorptive desulfurization can be carried out in a liquid state and at a low temperature, preferably at a temperature of not more than 100 °C. The activated carbon fiber hardly outflows from the adsorption vessel (tower), and the differential pressure is scarcely varied in the adsorption vessel. Therefore, the activated carbon fiber is preferred in view of the operation as well.

The inventors have focused on the micropore specific surface area and the mesopore average pore diameter as parameters for the adsorptive desulfurization agent to affect the desulfurization characteristics, and found that the adsorption performance is remarkably improved when the value of the product of both the micropore specific surface area and the mesopore average pore diameter, i.e., Smicro x 2 x Vext/Sext is not less than 3.0 cm$^3$/g and preferably not less than 5.0 cm$^3$/g.

Those known as the adsorptive desulfurization agent for the sulfur compounds such as hydrogen sulfide include activated carbon, inorganic porous materials such as zeolite and alumina, metals such as nickel, and composites thereof. Conventionally, it has been considered that the activated carbon has a small adsorption capacity for the sulfur compounds, and the activated carbon have no sufficient performance as the adsorptive desulfurization agent. In particular, those based on zeolite are predominantly used in the gas system. As a result of the investigation performed by the inventors about various types of materials for the adsorptive desulfurization for the petroleum distillate products, it has been found out that the carbon material having the specified specific surface area, especially the activated carbon fiber, has the excellent adsorptive desulfurization performance with respect to the organic sulfur compounds, especially thiophene, benzothiophene, and dibenzothiophene.

As for the adsorptive desulfurization agent of the present invention, it is preferable that the petroleum distillate products, which are brought into contact with the adsorptive desulfurization agent, preferably contain major components of hydrocarbons having boiling points of 30 to 400 °C, and it is preferable that the sulfur content in the petroleum distillate products is not more than 200 ppm. When the petroleum distillate products are gasoline distillate products, it is preferable that the adsorptive desulfurization agent further contains a zeolite component.

According to a second aspect of the present invention, there is provided a method for desulfurizing petroleum distillate products, comprising a step of bringing petroleum distillate products containing organic sulfur compounds into contact with an adsorptive desulfurization agent containing a carbon material having a specific surface area of not less than 500 m$^2$/g.

In the desulfurization method of the present invention, it is preferable that the petroleum distillate products are brought into contact with the adsorptive desulfurization agent in a liquid phase state. In particular, it is preferable that the adsorptive desulfurization agent is brought into contact with the petroleum distillate products at a temperature of not more than 100 °C. When the petroleum distillate products are gasoline distillate products, it is preferable that the adsorptive desulfurization agent further contains a zeolite component.

It is preferable that the desulfurization method of the present invention further comprises a step of desorbing the organic sulfur compounds by heating the adsorptive desulfurization agent in a non-oxidizing atmosphere to regenerate the adsorptive desulfurization agent after bringing the petroleum distillate products into contact with the adsorptive desulfurization agent to effect the desulfurization, and a step of bringing the petroleum distillate products containing the organic sulfur compounds into contact with the regenerated adsorptive desulfurization agent.

The adsorptive desulfurization agent after the adsorptive desulfurization can be repeatedly used by effecting the desorption and the regeneration with ease, for example, by the washing with a solvent such as toluene, alcohol, and acetone, the heating in a nitrogen atmosphere, and the heating under a reduced pressure. In particular, the regeneration can be sufficiently performed in a short period of time by effecting the heating in a non-oxidizing atmosphere (usually in a nitrogen atmosphere) and/or under a reduced pressure. It is also possible to use water or steam as a heating source, although water or steam does not directly function as any desorbing agent or desorbent.

According to a third aspect of the present invention, there is provided a method for producing gas oil; comprising an adsorptive desulfurization step of bringing gas oil distillate products in a liquid phase state containing sulfur contents of not more than 500 ppm into contact with an adsorptive desulfurization agent which comprises a carbon material having a specific surface area of not less than 500 m$^2$/g and which adsorbs sulfur compounds contained in the gas oil distillate products; and a desorption regeneration step of washing the adsorptive desulfurization agent with an aromatic solvent to regenerate the adsorptive desulfurization agent.

According to a fourth aspect of the present invention, there is provided a gas oil which is obtained with the inventive method wherein a sulfur concentration is not more than 15 ppm, a ratio of sulfur of 4,6-dimethylbenzothiophene to a total sulfur content is not more than 10 %, and a 90 % distillation temperature is not less than 310 °C; a gas oil wherein a sulfur concentration is not more than 15 ppm, a ratio of aromatic compounds having two or more rings to a total aromatic compound content is not more than 7 %, and a 90 % distillation temperature is not less than 310 °C; or a gas oil wherein a sulfur concentration is not more than 15 ppm, a ratio of aromatic compounds having three rings to a total aromatic compound content is less than 0.5 %, and a 90 % distillation temperature is not less than 310 °C.

BRIEF DESCRIPTION OF THE DRAWINGS

Fig. 1 shows an example of the apparatus used for the process for producing gas oil according to the present invention.

Fig. 2 shows the apparatus used for the process for producing gas oil according to the present invention and Steps 1 to 3 using the apparatus.

Fig. 3 shows the apparatus used for the process for producing gas oil according to the present invention and Steps 4 to 6 using the apparatus.

Fig. 4 shows a characteristic of the adsorption amount in relation to various adsorbing agents or adsorbents prepared in Example 1.

Fig. 5 shows the concentration change in relation to the sulfur content and the gas oil outflowed from the column when the feed gas oil is allowed to flow through the column in Example 2.

Fig. 6 shows the concentration change in relation to n-decane and the gas oil outflowed from the column when the gas oil contained in the column is allowed to outflow with n-decane in Example 2.

Fig. 7 shows the concentration change in relation to the sulfur content, n-decane, and the desorbent outflowed from the column when n-decane and the sulfur content contained in the column are allowed to outflow with toluene in Example 2.

Fig. 8 shows the concentration change in relation to the sulfur content and the gas oil outflowed from the column when the feed gas oil is allowed to flow again in Example 2.

Fig. 9 shows types and concentrations of sulfur compounds contained in the adsorption-desulfurized gas oil produced in Example 2.

BEST MODE FOR CARRYING OUT THE INVENTION

Embodiments of the present invention will be specifically explained below. However, the present invention is not limited thereto.

The adsorptive desulfurization agent of the present invention preferably contains, for example, not less than 80 % by weight of the major component of the carbon material such as the activated carbon. However, the adsorptive desulfurization agent of the present invention may contain other components, for example, a zeolite component as described later on. The specific surface area can be measured by the so-called the nitrogen adsorption method.

Activated Carbon

The activated carbon is a carbon material in which the pore structure is developed. The activated carbon is widely used industrially as adsorptive desulfurization agents and catalyst carriers. The carbon material, which exhibits the adsorption activity naturally as anthracite as it is, is also known. However, in general, the activated carbon is produced such that an activated carbon raw material as an organic matter (carbonaceous substance) is carbonized, followed by being activated, if necessary. However, the production method is not specifically limited.

Raw Material for Activated Carbon

Many carbonaceous substances are assumed as the raw material for the activated carbon. The production condition differs depending on the type of the raw material. Those usable as the raw material include, for example, plant wood, sawdust, coconut husk, and pulp spent liquor as well as fossil fuel-based materials such as petroleum heavy oil, and pitch and coke obtained by pyrolysis of the above. Starting raw materials for the activated carbon fiber include fibers obtained by spinning synthetic polymers, tar pitches, and petroleum-based pitches. The coal is classified into brown coal, bituminous coal, and anthracite depending on the difference in the degree of coalification. The synthetic polymer to serve as the starting material includes raw materials of phenol resin, furan resin, polyvinyl chloride rein, polyvinyl chloride vinylidene resin, and waste plastic.

Carbonization of Raw Material for Activated Carbon

The carbonization generally refers to a series of various chemical reactions in which the carbon is subjected to the concentration including, for example, the cleavage of the bond caused by the thermal change of the organic matter as well as the degradation, the polymerization condensation, and the aromatic ring formation to bring about the recombination to provide more stable bonds. The coke and the char can be obtained by thermally treating the raw material. The liquid is distillated simultaneously with the evaporation of water, carbon oxide, and light hydrocarbons during the carbonization reaction process. The pore structure, which greatly affects the adsorption characteristic of the activated carbon, is changed depending on the carbonization temperature. In general, when the activated carbon is produced, the carbonization is performed within a range of 600 to 800 °C to produce a carbonized material (carbon material). However, the condition is not specifically limited.

Activation of Carbonized Material

The activation method, which is performed after the carbonization in the production of activated carbon, includes the gas activation and the chemical activation. In this country, the gas activation method, which is based on the use of steam, is predominantly used. However, when the powder activated carbon is produced, the chemical activation method, which is based on the use of zinc chloride, is also used at present. In recent years, the alkali activation method, which is a new chemical activation method, has been also reported.

Gas Activation Method

The gas activation method is also referred to as "physical activation". In this method, the carbonized material is allowed to effect the contact reaction, for example, with steam, carbon dioxide, and oxygen at a high temperature to produce the finely porous activated carbon. It is considered that the activation process is advanced in accordance with two stages. In the heating process at the first stage, the portion having no microstructure is selectively decomposed and consumed, the fine pore spaces, which have been closed between the carbon crystals, are opened or released, and the specific surface area is suddenly increased. In the gasifying reaction process at the second stage, for example, the carbon crystals are reacted and exhausted to form mesopores and macropores.

Chemical Activation Method

In the chemical activation method, the raw material is equivalently impregnated with the activating chemical, followed by being heated and calcined in an inert gas atmosphere. Accordingly, the dehydration reaction and the oxidation reaction of the chemical are caused to produce the finely porous activated carbon in accordance with this method. Those usable as the activating chemical include zinc chloride, sulfuric acid, boric acid, nitric acid, hydrochloric acid, phosphoric acid, sodium phosphate, calcium chloride, potassium hydroxide, sodium hydroxide, potassium carbonate, sodium carbonate, calcium carbonate, potassium sulfate, sodium sulfate, potassium nitrite, potassium chloride, potassium permanganate, potassium sulfide, and potassium thiocyanate as well as other dehydrating, oxidizing, and eroding chemicals. In the case of the chemical activation, the important criterion of the activation is the mass ratio of the chemical with which the carbonaceous raw material is impregnated. When the mass ratio is small, micropores are formed. As the mass ratio is increased, pores having large pore diameters are developed, and the pore volume is increased as well.

Sulfuric Acid Activation Method

Sulfuric acid to be used is preferably concentrated sulfuric acid (concentration: about 30 to 40 % by weight).

The heat treatment after the impregnation is usually performed for about 4 to 6 hours at about 200 to 300 °C in a non-oxidizing atmosphere.

Alkali Activation Method

In recent years, it has been reported that activated carbon, which has a specific surface area of not less than 3,000 m$^2$/g, is produced from petroleum coke in accordance with a special chemical activation method using, for example, KOH, and the activated carbon is extremely excellent in the adsorption capacity (H. March, D. Crawford: Carbon, 20, 419 (1982); A. N. Wennerberg, T. M. O'Grady: US Patent 4,082,694). Also in this country, studies have been made by using various carbonaceous materials such as petroleum coke, petroleum pitch, coal pitch, and coconut husk to investigate the realization of highly functional activated carbon. In particular, this method is effective on soft carbon such as optically anisotropic pitch-based carbon fiber for which it is impossible to form pores, for example, by the steam activation method. This production method has such a characteristic feature that alkali (principally KOH) is used in an amount which is about 1-5 times that of the carbonaceous raw material in mass ratio. The activation is effected by treating the raw material mixture at a predetermined temperature of 400 to 900 °C in an activating gas atmosphere. After the reaction, the contents are taken out, followed by sufficiently repeating the washing with water. Accordingly, the alkali content is eluted, and the activated carbon is obtained. As for the obtained activated carbon, both of the specific surface area and the pore volume have extremely large values. There is such a possibility that the activated carbon, which is excellent in the adsorption performance, can be produced as compared with any other activation method. Such an activation method is also described, for example, in Japanese Patent Application Laid-open No. 5-247731.

Adsorption Characteristic of Activated Carbon

The adsorption characteristic based on the activated carbon is intrinsically determined by the contact between the surface of the activated carbon and the adsorbate molecules and the interaction energy in this situation. Therefore, the intensity of the interaction is important depending on the relationship between the pore distribution and the adsorbate molecule diameter and the structure and the physical properties of the adsorbate molecule. In the case of the liquid phase adsorption, the competitive adsorption in the multi-component system occurs in many cases, which is complicated as the state of the solute molecules in the solvent relates thereto. The inventors have found out the fact that the adsorption capacity for the sulfur compounds is not merely proportional to the specific surface area. The adsorption capacity is large in the case of the activated carbon fiber having a relatively small specific surface area as compared with the powder activated carbon having a large specific surface area. Various causes may be assumed. However, it is considered that the pore structure of the activated carbon exerts any great influence.

Activated carbon fiber

The activated carbon fiber is based on the use of the carbon fiber as a raw material for the activated carbon. The activated carbon fiber is advantageous, for example, in that the adsorption speed is extremely large as compared with the granular activated carbon, and the activated carbon fiber can be processed to have various shapes such as felt shapes in which the adsorption amount is large at a low concentration. In the present invention, it is preferable to use the activated carbon fiber having an average length of not less than 100 μm in order that the outflow of the activated carbon fiber from the adsorptive desulfurization vessel (tower) is decreased, and the differential pressure in the adsorption vessel is hardly caused. It is more preferable to use the activated carbon fiber having an average length of not less than 1 mm.

Carbon Fiber

In general, the carbon fiber is obtained as follows. That is, the thermal oxidizing crosslinking reaction is performed at 200 to 400 °C in the air by using pitch fiber obtained by melting and spinning, for example, PAN (polyacrylonitrile) fiber, high tenacity rayon, petroleum pitch, and coal pitch, followed by being heat-treated in nitrogen at 800 to 1,500 °C and being heat-treated at 2,000 °C. The obtained graphite fiber has a high carbon content.

Pitch

The pitch includes isotropic pitch and anisotropic pitch. The carbon fiber, which is produced from the isotropic pitch, is cheap, but the carbon fiber has a low strength, because the molecular orientation is unsatisfactory. On the contrary, the carbon fiber, which is produced from the optically anisotropic (mesophase) pitch, has the highly sophisticated molecular orientation, and the carbon fiber exhibits the excellent mechanical properties.

Orientation

In the case of the carbon fiber based on the optically anisotropic pitch, it is important to control the orientation of the graphite layer surface in the fiber. The orientation is approximately controlled in the spinning step including factors of, for example, the pitch viscosity during the spinning, the spinning speed, the cooling speed, and the nozzle structure. As for the activated carbon fiber based on the optically anisotropic pitch for the way of use of the adsorbent, it is preferable that the orientation of the graphite layer surface in the fiber is the so-called radical orientation.

Spinning

The spinning method includes, for example, the melting spinning, the centrifugal spinning, the vortex spinning, and the melt blow spinning. However, any one of the methods is usable.

Formation of Infusible Pitch

The pitch is a thermoplastic organic compound. In order to perform the carbonizing treatment while retaining the fiber form, the infusing treatment is usually performed after the spinning to obtain the infusible fiber. As for the formation of the infusible fiber, the infusing treatment can be performed continuously in the liquid phase and the gas phase in accordance with an ordinary method. However, the treatment is usually performed in an oxidizing atmosphere of, for example, air, oxygen, or $NO_2$. For example, the infusing treatment in the air is performed at an average temperature-raising speed of 1 to 15 °C/minute in a temperature region in which the treatment temperature range is about 100 to 350 °C.

Slight Carbonization of Infusible Fiber

The infusible fiber can be used for the next activating treatment step as it is. However, it is desirable that the slight carbonization treatment is performed to obtain the slightly carbonized fiber, because the infusible fiber contains a large amount of lower volatile components. This treatment is performed in an inert gas such as nitrogen. The treatment temperature range is not less than 400 °C and not more than 700 °C.

Formation of Milled Fiber with Slightly Carbonized Fiber or the Like

The infusible fiber or the slightly carbonized fiber can be activated even in a form of mat or felt to prepare the adsorbent. However, in order to uniformly mix the fiber with the chemical and/or provide the uniform surface by the activating reaction, it is also possible to perform the pulverization (formation into the milled fiber) before the activation. If the fiber is excessively minute, it is difficult to perform the activation. Therefore, it is preferable to obtain a size of not less than 5 μm. Those effectively usable for the method for forming the milled fiber include, for example, the victory mill, the jet mill, the cross flow mill, and the high speed rotary mill. In order to efficiently form the milled fiber, for example, it is appropriate to adopt a method in which the fiber is cut into pieces by rotating a rotor equipped with a blade at a high speed.

Form of Adsorbent

The adsorptive desulfurization agent of the present invention can be used in any one of the forms of fiber not subjected to the pulverization, powder, granules, and formed product. However, when the adsorptive desulfurization agent is continuously used and repeatedly regenerated, it is preferable to make the use of a formed product of the activated carbon. Those adaptable as the form or shape of the formed product include, for example, the granular form, the honeycomb form, the mat form, and the felt form. When the adsorptive desulfurization agent is used in the granular form, it is preferable to use the spherical form having radii of 0.3 to 3 mm in relation to the packing density, the adsorption speed, and the pressure loss.

Formation of Activated Carbon

When the adsorptive desulfurization agent is used in the form of the formed product, it is also preferable that the powder is subjected to the formation and then the carbonization treatment is performed, followed by performing the activation treatment. Alternatively, it is also preferable that the formation is performed after the activation treatment, followed by performing the drying and the calcination. When the formation is performed, it is possible to use a binder (binding agent), if necessary. Those exemplified as the binder include, for example, tar pitch, tar compatible resin, expanded graphite, lignin, molasses, sodium alginate, carboxymethyl cellulose (CMC), synthetic resin such as phenol resin, polyvinyl alcohol, organic binding agent such as starch, smectite, and water glass. The binding agent as described above may be used to such an extent that the formation is successfully performed. Although there is no special limitation, the binding agent is usually used in an amount of 0.05 to 2 % by weight with respect to the raw material. It is also preferable to improve the adsorption performance for the sulfur compounds to which the activated carbon is difficult to be adsorbed, by mixing any inorganic matter such as silica, alumina, and zeolite. Alternatively, it is also preferable that the diffusion speed of the sulfur compounds is improved by increasing the amount of existence of mesopores and macropores. Further alternatively, it is also preferable that the adsorption performance is improved by forming a composite with any metal.

Pretreatment for Adsorptive Desulfurization Agent

In order to remove any water in a minute amount adsorbed to the adsorptive desulfurization agent in the pretreatment, it is preferable that the adsorptive desulfurization agent is dried at about 100 to 200 °C in an oxidizing atmosphere such as air. If the temperature exceeds 200 °C, the reaction is caused with oxygen to decrease the weight of the adsorptive desulfurization agent, which is not preferred. On the other hand, it is preferable that the adsorptive desulfurization agent is dried at about 100 to 800 °C in a non-oxidizing atmosphere such as nitrogen. In particular, when the heat treatment is performed for the adsorptive desulfurization agent at 400 to 800 °C in the non-oxidizing atmosphere, then the organic matters and the contained oxygen are removed, and the adsorption performance is improved, which is more preferred.

Desorption Regeneration for Adsorption Agent

The adsorptive desulfurization agent after the adsorptive desulfurization can be repeatedly used by desorbing and regenerating the adsorptive desulfurization agent with ease, for example, by the washing with a solvent such as toluene, alcohol, and acetone, the heating in the nitrogen atmosphere, or the heating under the reduced pressure. In particular, when the heating is performed in a non-oxidizing atmosphere (usually in a nitrogen atmosphere) and/or under a reduced pressure, the regeneration can be sufficiently performed in a short period of time. It is also possible to use water or steam as the heating source, although water or steam does not directly function as the desorbent.

Specific Surface Area of Carbon Material

It is preferable for the adsorptive desulfurization agent of the present invention that the micropore specific surface area $S_{micro}$ ($m^2/g$), the micropore external pore volume $V_{ext}$ ($cm^3/g$), and the micropore external specific surface area $S_{ext}$ ($m^2/g$) of the carbon material to be used for the adsorptive desulfurization agent satisfy the following expression (1).

$$S_{micro} \times 2 \times V_{ext}/S_{ext} > 3.0 \tag{1}$$

It is preferable that the carbon material to be used for the adsorptive desulfurization agent of the present invention has a large specific surface area, and the carbon material has mesopores having pore diameters of about 20 to 500 angstroms. Those usable to measure the parameters such as the specific surface area, the pore diameter, and the pore volume to be used to analyze the carbon material generally include the gas adsorption method, especially the nitrogen adsorption method which utilizes the physical adsorption based on the intermolecular force acting between the gas molecules and the solid surface. Many carbon materials have average pore diameters of not more than 20 angstroms. Therefore, any attention is required to analyze such carbon materials. The BET (Brunouer-Emmett-Teller) method, which is generally used in many cases, is the method for determining the specific surface area of the carbon material on the basis of the following expression (2).

$$x/V/(1 - x) = 1/V_m/C + (C - 1)x/V_m/C \tag{2}$$

In this expression, x represents the relative pressure, V represents the adsorption amount when the relative pressure is x, $V_m$ represents the adsorption amount of the single molecule layer, and C represents the constant (> 0). That is, in the BET method, it is necessary that the constant C is a positive value, and any negative value is inappropriate.

In the case of the constant C < 0, the parameters of the specific surface area, the pore diameter, and the pore volume are determined by the Langmuir method in many cases. In the Langmuir method, the specific surface area of the carbon material is determined on the basis of the following expression (3).

$$x/V = x/Vm + 1/Vm/C_L \qquad (3)$$

In this expression, x represents the relative pressure, V represents the adsorption amount when the relative pressure is x, Vm represents the adsorption amount of the single molecule layer, and $C_L$ represents the constant (> 0). Therefore, also in the case of the Langmuir method, it is not appropriate that the constant $C_L$ is negative.

The micropores can be quantitatively measured by the t-plot method. In the t-plot method, the thickness t of the adsorption layer (function of the relative pressure) is plotted along the horizontal axis, and the adsorption amount is plotted along the vertical axis to plot the change of the adsorption amount of the carbon material with respect to the thickness t of the adsorption layer. In relation to the plotted characteristic, a thickness area $t_B$, in which the slope of the t-plot is continuously decreased, is present. In the area $t_B$, fine pores (micropores) are filled with the adsorption gas (nitrogen) as the multi-molecule layer adsorption is advanced, and no contribution is made as the surface. This phenomenon results from the fact that the micropores are filled in the thickness area $t_B$ of the adsorption layer. Therefore, the filling of the micropores with the gas molecules and the capillary condensation are not caused in such areas that the thickness t of the adsorption layer is smaller or larger than that in the area $t_B$. Therefore, the slope of the t-plot is constant. Therefore, when the straight line is drawn in the area in which the thickness t of the adsorption layer is larger than that in the area $t_B$, i.e., in the area in which the filling of the micropores with the gas molecules is completed, the specific surface area (external specific surface area) of the portion which contributes as the surface other than the micropores of the carbon material is determined from the slope thereof. When the value of the intercept of the vertical axis of the straight line drawn in the area in which the thickness t of the adsorption layer is larger than that in the area $t_B$ is subjected to the conversion for the liquid, the micropore volume is determined. The foregoing fact is summarized as follows. That is, the adsorption amount V of the carbon material, the micropore external specific surface area Sext ($m^2/g$), the micropore specific surface area Smicro ($m^2/g$), the micropore volume Vmicro ($cm^3/g$), and the micropore external pore volume Vext ($cm^3/g$) are determined in accordance with the following expressions (4) to (8).

$$V = \alpha t + \beta \ (t > t_B) \qquad (4)$$

$$Sext = \alpha \times 10^3 \times D \qquad (5)$$

$$Vmicro = \beta \times D \qquad (6)$$

$$Smicro = Sa - Sext \qquad (7)$$

$$Vext = Va - Vmicro \qquad (8)$$

In the expressions described above, $\alpha$ ($cm^3$ (STP)/g/nm) represents the slope of the straight line of the t-plot in the area in which the thickness t of the adsorption layer is larger than that in the area $t_B$, $\beta$ ($cm^3$ (STP)/g) represents the intercept between the vertical axis and the straight line of the t-plot in the area in which the thickness t of the adsorption layer is larger than that in the area $t_B$, D represents the density conversion coefficient (0.001547 when nitrogen is used as the gas) ($cm^3$ liq/$cm^3$ (STP)), Sa represents the total specific surface area ($m^2/g$), and Va represents the total pore volume ($cm^3/g$). However, Sa represents the total specific surface area as determined by the BET method or the Langmuir method described above. Va can be defined as the value obtained by converting the adsorption gas amount at the pressure approximate to the saturated vapor pressure into the liquid, which is, for example, the value obtained by multiplying the adsorption amount ($cm^3$ (STP)/g) at a relative pressure of 0.95 by D.

Many carbon materials include micropores at almost all portions. Few mesopores exist at the outside of the micropores. However, according to a verifying experiment performed by the inventors, it has been found out that the mesopores in a minute amount existing at the outside of the micropores greatly affect the adsorption of the sulfur compounds. The inventors have found out the fact that the value of 2 x Vext/Sext is preferred as the index to represent the influence of the mesopores. The value of 2 x Va/Sa represents the average pore radius (Da/2) or the distance between walls of the flat plate-shaped pore assuming that the pore is cylindrical. Therefore, 2 x Vext/Sext is the index to indicate the value approximately to the average pore radius (Dext/2) or the distance between walls of the mesopores. Further, in the present invention, the following fact has been found out. That is, it is preferable that the micropore specific surface area of the carbon material and the mesopore average pore radius (or the distance between walls) are larger in relation to the adsorption of the sulfur compounds. In particular, the adsorption performance of the carbon material is improved as the value of the product of the both (Smicro x 2 x Vext/Sext) is more increased. Specifically, it has been revealed that the adsorption performance of the carbon material is improved when the value of Smicro x 2 x Vext/Sext is not less than 3.0 $cm^3/g$ and more preferably not less than 5.0 $cm^3/g$. The cause thereof is not distinct. However, it is considered that the following fact is suggested. That is, the adsorption performance of the carbon material does not simply depend on the amount of the mesopores, and in order to improve the adsorption performance of the carbon material, it is necessary to provide the mesopores having sufficient diameters so as not to be closed by the adsorption of the sulfur compounds.

Packing Density of Carbon Material

In the case of the adsorptive desulfurization agent of the present invention, in order that the sulfur content contained in the gas oil is not more than 15 ppm, it is desirable that the packing density of the carbon material to be used for the adsorptive desulfurization agent is sufficiently increased. Specifically, it is necessary that at least the following expression (9) is satisfied among the packing density C (g-adsorbent/ml-adsorbent) of the carbon material, the adsorption capacity A (g-S/g-adsorbent) per unit weight of the carbon material when the sulfur concentration of the gas oil in the liquid state is 15 ppm, and the density B (g/ml) of the gas oil.

$$C > B \times k/A \qquad (9)$$

In this expression, k = 0.000015 (g-S/g) is given. When the sulfur concentration of the gas oil in the liquid state is 15 ppm, the adsorption capacity A per unit weight of the carbon material is determined from the absorption isotherm at the temperature of the adsorptive desulfurization step.

The carbon material as described above is excellent in the adsorption performance for thiophene, benzothiophene, and dibenzothiophene. The carbon material is excellent in the adsorption performance for benzothiophene and dibenzothiophene as compared with the zeolite component. In particular, the carbon material is excellent in the adsorption performance for dibenzothiophene. Further, aromatic components exert less influence. On the other hand, the zeolite component is excellent in the adsorption performance for mercaptan, chain sulfide, cyclic sulfide, and thiophene. The zeolite component is excellent in the adsorption performance for mercaptan, chain sulfide, and cyclic sulfide as compared with the carbon material. Therefore, when the zeolite component is used in combination with the carbon material as the adsorptive desulfurization agent depending on the type and the amount of the organic sulfur compounds contained in the petroleum distillate products, it is possible to efficiently remove the organic sulfur compounds contained in the petroleum distillate products. The type of zeolite includes, for example, the X type zeolite, the Y type zeolite, the L type zeolite, mordenite, ferrierite, and β-zeolite.

The zeolite generally refers to crystalline water-containing aluminosilicate represented by the general formula $xM_{2/n}O \cdot Al_2O_3 \cdot ySiO_2 \cdot zH_2O$ (in this expression, n represents the number of valencies of cation M, x represents the number of not more than 1, y represents the number of not less than 2, and z represents the number of not less than 0). The structure of zeolite is as follows. That is, tetrahedral structures of $SiO_4$ or $AlO_4$, which are formed about the centers of Si or Al, are regularly arranged three-dimensionally. The structure is shown in detail, for example, in the web page of http://www.iza-structure.org/ of Structure Commission of International Zeolite Association (IZA). The tetrahedral structure of $AlO_4$ is negatively charged. Therefore, electric charge-compensating cations such as those of alkali metals and alkaline earth metals are retained in pores and/or cavities. The electric charge-compensating cation can be easily exchanged with another cation such as proton. For example, when the acid treatment is performed, then the molar ratio of $SiO_2/AlO_4$ is increased, the acid strength is increased, and the solid acid amount is decreased. The adsorption of the sulfur compounds is not affected by the acid strength so much. Therefore, it is preferable that the solid acid amount is not decreased.

The faujasite type zeolite, which is preferably usable in the present invention, is represented by the general formula $xNa_2O \cdot Al_2O_3 \cdot ySiO_2$, and those in which X < 1 and y < 10 are given are preferably usable. As for the molar ratio of $SiO_2/Al_2O_3$, those in which the molar ratio is not more than 10 mol/mol are preferably usable. The mordenite, which is preferably usable in the present invention, is represented by the general formula $xNa_2O \cdot Al_2O_3 \cdot ySiO_2$, in which X < 1 and y < 20 are given. As for the molar ratio of $SiO_2/Al_2O_3$, those in which the molar ratio is not more than 20 mol/mol are preferably usable.

The properties of the zeolite to be used for the present invention are preferably as follows. That is, the degree of crystallization is not less than 80 % and especially not less than 90 %. The crystallite diameter is not more than 5 μm and especially not more than 1 μm. The average particle diameter is not more than 30 μm and especially not more than 10 μm. The specific surface area is not less than 300 m$^2$/g and especially not less than 400 m$^2$/g.

The NaX type zeolite, the NaY type zeolite, and the Na mordenite are the X type zeolite, the Y type zeolite, and the mordenite in which the electric charge-compensating cation is sodium. The KL type zeolite and the K ferrierite are the L type zeolite and the ferrierite in which the electric chargecompensating cation is potassium. If the electric charge-compensating cation is hydrogen, then thiophene and benzothiophene are reacted even at room temperature with each other and with the aromatic compounds such as toluene to produce oligomer-like heavy matters, and the adsorbent surface is coated therewith to inhibit the adsorption of the sulfur compound, which is not preferred. Those preferably usable as the electric charge-compensating cation include, for example, alkali metals such as lithium, sodium, potassium, rubidium, and cerium; alkaline earth metals such as magnesium, calcium, strontium, and barium; and transition elements such as manganese, iron, cobalt, nickel, copper, zinc, ruthenium, lead, silver, and lanthanum. In particular, zeolite, which has the alkali metal ion as the electric charge-compensating cation, is preferably usable.

The zeolite as described above can be used as it is as the zeolite adsorbent. However, it is preferable to use a formed product which contains the zeolite as described above by not less than 30 % by weight and especially not less than 60 % by weight. As for the shape or form, it is preferable to adopt a small form, especially a spherical form within a range in which the differential pressure is not increased in order to increase the concentration gradient. In the case of the spherical form, the size is preferably such that the diameter is 0.5 to 5 mm and especially 1 to 3 mm. In the case of the columnar form, it is preferable that the diameter is 0.1 to 4 mmφ and especially 0.12 to 2 mmφ, and the length is 0.5 to 5 times and especially 1 to 2 times the diameter.

When the zeolite is used as the formed product, it is also preferable that a semi-processed product is formed, followed by being dried and calcined as described in Japanese Patent Application Laid-open No. 4-198011. Alternatively, it is also preferable that a binder (binding agent) is optionally mixed with zeolite, followed by being formed, dried, and calcined.

The binder is exemplified, for example, by clay such as alumina and smectite, and inorganic binding agents such as water glass. It is enough that the binding agent as described above is used to such an extent that the formation can be performed. Although there is no special limitation, the binding agent is usually used in an amount of about 0.05 to 30 % by weight with respect to the raw material. The following procedures are also available. That is, inorganic particles of, for example, silica, alumina, or another zeolite and/or organic matters such as the activated carbon to be used in the present invention are mixed to improve the adsorption performance for the sulfur compounds which are hardly adsorbed by the zeolite. For example, the existing amounts of the mesopores and the macropores are increased to improve the diffusion speed of the sulfur compounds. Alternatively, it is also allowable to improve the adsorption performance by the composite formation with metal. In the case of particles, it is preferable that the crashing strength of the carrier is not less than 3.0 kg/pellet and especially not less than 3.5 kg/pellet, because the adsorbent is not cracked or broken.

When the zeolite component as described above is used as the adsorptive desulfurization agent of the present invention together with the carbon material, the following procedure is available. That is, the adsorptive desulfurization agent containing the carbon material and the adsorptive desulfurization agent containing the zeolite component are separately arranged. For example, the adsorptive desulfurization agent containing the carbon material and the adsorptive desulfurization agent containing the zeolite component are arranged in series with respect to the flow of the petroleum distillate products to successively bring the petroleum distillate products into contact with the carbon material, the hydrocarbon, and the zeolite component. Alternatively, the following procedure is also available. That is, the adsorptive desulfurization agent containing the carbon material and the adsorptive desulfurization agent containing the zeolite component are physically mixed and used as a mixed adsorptive desulfurization agent. Further alternatively, the following procedure is also available. That is, adsorptive desulfurization agent particles are used, which are produced so that the carbon material and the zeolite component are simultaneously contained in the adsorptive desulfurization agent particles. The amount of use or the content of the zeolite component depends on the type of the sulfur compound contained in the gasoline distillate products. However, the amount of use or the content of the zeolite component is preferably 0 to 60 % by weight with respect to the total amount of the carbon material and the zeolite component.

Petroleum Distillate Products as Desulfurization Objective

The petroleum distillate products are the liquid containing major components of hydrocarbons obtained by refining and processing the crude oil. The boiling points of the principally contained hydrocarbons are 30 to 400 °C. It is preferable that the sulfur content, which is contained in the petroleum distillate products before performing the adsorptive desulfurization of the present invention, is not more than 500 ppm, and especially not more than 200 ppm, and more especially not more than 50 ppm. It is more preferable to use the petroleum distillate products having a small content, for example, not more than 10 ppm of the nitrogen compounds which inhibit the adsorption of the sulfur compounds. The petroleum distillate products as described above are exemplified, for example, by gas oil distillate products, kerosene distillate products, and gasoline distillate products. The distillate products as described above are usable as raw materials for petroleum products such as gas oil, kerosene, gasoline, and hydrocarbon fuels for fuel cells.

Gas Oil Distillate Products

The gas oil distillate products principally contain hydrocarbons having numbers of carbon atoms of about 16 to 20. The density (15 °C) is about 0.790 to 0.880 g/cm$^3$, the boiling point range is about 100 °C to 400 °C, the 10 % distillation temperature is about 160 °C to 280 °C, and the 90 % distillation temperature is about 280 °C to not more than 360 °C. Paraffinic hydrocarbons are contained in a large amount. In the present invention, it is preferable that the 90 % distillation temperature of the gas oil distillate products is not less than 310 °C, especially 320 to 360 °C, and more especially 340 °C to 360 °C.

Kerosene Distillate Products

The kerosene distillate products principally contain hydrocarbons having numbers of carbon atoms of about 12 to 16. The density (15 °C) is about 0.770 to 0.850 g/cm$^3$, the boiling point range is about 130 °C to 320 °C, the 10 % distillation temperature is about 150 °C to 190 °C, and the 95 % distillation temperature is about 200 °C to not more than 300 °C. Paraffinic hydrocarbons are contained in a large amount.

Gasoline Distillate Products

The gasoline distillate products principally contain hydrocarbons having numbers of carbon atoms of about 4 to 11. The density (15 °C) is about 0.710 to 0.783 g/cm$^3$, the boiling point range is about 20 °C to 220 °C, the 10 % distillation temperature is about 35 °C to not more than 70 °C, the 50 % distillation temperature is not less than 75 °C to not more than 110 °C, and the 90 % distillation temperature is about 110 °C to not more than 180 °C. In order to make the use for gasoline engines for automobiles and the like, the distillate products having the high octane number are obtained, for example, by the catalytic cracking, the catalytic reformation, and the alkylation. In general, aromatic compounds and low boiling point isoparaffin, and olefin have high octane numbers.

In the method for producing the gas oil according to the present invention, at first, the adsorptive desulfurization agent, which has a specific surface area of not less than 500 m$^2$/g and preferably not less than 2,000 m$^2$/g and which more preferably contains the carbon material which satisfies the expression (1) described above, is brought into contact with the gas oil distillate products in the liquid phase state containing the sulfur compounds of not more than 500 ppm in the adsorptive desulfurization tower. In this procedure, it is preferable that the temperature in the adsorptive desulfurization tower is controlled to be not more than 80 °C. After the adsorptive desulfurization step, the adsorptive desulfurization agent is washed with an aromatic solvent, preferably toluene preferably heated to not less than 50 °C and more preferably not less than 80 °C. Accordingly, the sulfur compounds are desorbed from the adsorptive desulfurization agent to regenerate the adsorptive desulfurization agent. The sulfur compounds and the aromatic solvent, which are contained in the outflow liquid outflowed from the adsorptive desulfurization tower in the adsorptive desulfurization step, are separated from each other by the separation operation such as the distillation separation, the membrane separation, the solvent extraction, and the adsorption separation, and preferably the distillation separation. The separated sulfur compounds are mixed into heavy oil or the like. Alternatively, the separated sulfur compounds can be consumed with a boiler equipped with an exhaust gas-processing apparatus. The separated aromatic solvent can be reused in the desorption regeneration step.

In the method for producing the gas oil according to the present invention, it is preferable that the adsorptive desulfurization step and the desorption regeneration step are alternately repeated by using, for example, a plurality of adsorptive desulfurization towers. Accordingly, it is possible to produce the gas oil having a sufficiently low sulfur concentration highly efficiently over a long period of time at relatively low equipment cost and running cost.

In the method for producing the gas oil according to the present invention, it is preferable to add a step in which the gas oil remaining in the adsorptive desulfurization tower and not desulfurized sufficiently is recovered to return the gas oil to the feed gas oil after the adsorptive desulfurization step. Owing to this step, it is possible to decrease the loss of the gas oil. The following method is preferably usable as the method for recovering the gas oil. At first, the interior of the adsorptive desulfurization tower is washed with a paraffinic solvent, preferably hexane or decane which does not desorb the sulfur compounds from the adsorptive desulfurization agent. Subsequently, the paraffinic solvent and the petroleum distillate products, which are contained in the effluent outflowed from the adsorptive desulfurization tower, are separated from each other by the separation operation such as the distillation separation, the membrane separation, the solvent extraction and the adsorption separation, preferably the distillation separation. After that, the separated gas oil distillate products are returned to the feed gas oil, and the separated paraffinic solvent is reused in the washing step in the adsorptive desulfurization tower. For example, the following method is also usable as another method for recovering the gas oil. That is, any gas such as nitrogen, helium, argon, hydrogen, oxygen, and steam, preferably any inert gas such as nitrogen is supplied into the adsorptive desulfurization tower at ordinary temperature or in a state of being heated, and the gas oil is extruded by the pressure.

In the method for producing the gas oil according to the present invention, it is preferable to include a step of removing the aromatic solvent from the inside of the adsorptive desulfurization tower after the desorption regeneration step in order that the aromatic agent, which is used for the washing, is excluded from the product gas oil distillate products, the loss of the product gas oil is decreased, and the sufficient adsorptive desulfurization performance is obtained immediately after the start of the flow of the feed gas oil distillate products. In order to remove the aromatic solvent, it is enough that the paraffinic solvent, preferably hexane or decane is allowed to flow through the adsorptive desulfurization tower. In this procedure, the mixture liquid of the aromatic solvent and the paraffinic solvent outflowed from the adsorptive desulfurization tower is subjected to the separation into the aromatic solvent and the paraffinic solvent by the separation operation such as the distillation separation, the membrane separation, the solvent extraction, and the adsorption separation, preferably the distillation separation, and the aromatic solvent and the paraffinic solvent can be reused respectively. For example, the following method is also usable as another method for removing the aromatic solvent. That is, any gas such as nitrogen, helium, argon, hydrogen, oxygen, and steam, preferably any inert gas such as nitrogen is supplied into the adsorptive desulfurization tower at ordinary temperature or in a state of being heated, and the aromatic solvent is extruded by the pressure.

When the gas oil distillate products (feed gas oil), which contain the sulfur compounds, are allowed to flow through the adsorptive desulfurization tower after removing the aromatic solvent with the paraffinic solvent to regenerate the adsorptive desulfurization agent as described above, the paraffinic solvent is mixed with the initial distillate products of the gas oil obtained from the adsorptive desulfurization tower, because the paraffinic solvent remains in the adsorptive desulfurization tower. In this case, the gas oil initial effluent, which is mixed with the paraffinic solvent can be separated into the paraffinic solvent and the gas oil distillate products by the separation operation such as the distillation separation, the membrane separation, the solvent extraction, and the adsorption separation, preferably distillation separation. The separated gas oil distillate products can be mixed into the product gas oil or the feed gas oil, and the separated paraffinic solvent can be reused. When the step as described above is added, it is possible to obtain the gas oil having the higher quality.

Any form such as the fixed bed and pseudo-moving bed is available for the adsorptive desulfurization tower to be used for the method for producing the gas oil of the present invention. However, in order to produce the gas oil distillate products having a sulfur content of about 15 ppm from the feed gas oil having a sulfur content of several tens ppm, the swing system, in which two fixed bed adsorptive desulfurization towers are installed to alternately use them, is economic. In this system, it is preferable that the direction of the flow of the feed gas oil is opposite to that of the aromatic solvent (countercurrent). However, the same direction is also available (concurrent), because the control of the apparatus is complicated if the opposite direction is adopted. When the feed gas oil is allowed to flow to the adsorptive desulfurization tower, the differential pressure is raised in the adsorptive desulfurization tower depending on the packing density of the adsorptive desulfurization agent and the operation temperature. Therefore, it is preferable that the direction of the flow of the feed gas oil is directed vertically downwardly.

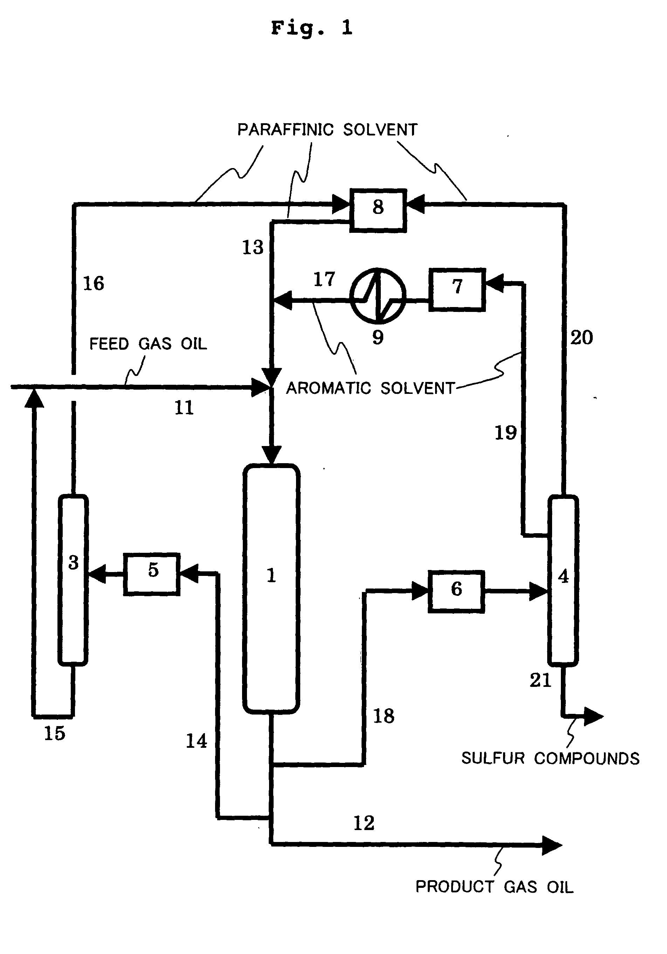

The desulfurization process for the gas oil distillate products, which is available when one adsorptive desulfurization tower is used, will be specifically explained below with reference to Fig. 1. The feed gas oil is supplied from a passage 11 to an adsorptive desulfurization tower 1, and the adsorptive desulfurization is performed for the feed gas oil in the adsorptive desulfurization tower 1 (adsorptive desulfurization step). The gas oil, which has been subjected to the adsorptive desulfurization, is discharged as the product gas oil via a passage 12 from the adsorptive desulfurization tower 1.

When it is detected that the sulfur concentration in the gas oil discharged from the adsorptive desulfurization tower 1 exceeds a predetermined concentration, then the supply of the feed gas oil from the passage 11 is stopped, and the paraffinic solvent is allowed to flow to the adsorptive desulfurization tower 1 from a passage 13. The paraffinic solvent extrudes the gas oil remaining in the adsorptive desulfurization tower 1 (step of recovering the gas oil). The passage 12 is closed immediately before the paraffinic solvent allowed to flow to the adsorptive desulfurization tower 1 is discharged from the adsorptive desulfurization tower 1. The mixture liquid of the paraffinic solvent and the gas oil outflowed from the adsorptive desulfurization tower 1 is fed from a passage 14 via a tank 5 to a distillation tower 3. The mixture liquid of the gas oil and the paraffinic solvent is distilled and separated in the distillation tower 3. The separated gas oil passes through a passage 15, and it is added to the feed gas oil in the passage 11. The separated paraffinic solvent is circulated from a passage 16 to a tank 8, and it is reused in the step of recovering the gas oil and the step of removing the adsorptive desulfurization agent as described later on.

In the step of recovering the gas oil described above, when the amount of the gas oil outflowed from the outlet of the adsorptive desulfurization tower 1 is not more than a predetermined value, the inflow of the paraffinic solvent from the passage 13 into the inlet of the adsorptive desulfurization tower 1 is stopped. Subsequently, the aromatic solvent, which is heated by a heat exchanger 9, is allowed to flow from a passage 17 to the adsorptive desulfurization tower 1. The aromatic solvent, which is supplied to the adsorptive desulfurization tower 1, extrudes the paraffinic solvent stored in the adsorptive desulfurization tower 1 and the sulfur compound adsorbed to the adsorptive desulfurization agent to perform the desorption regeneration for the adsorptive desulfurization agent (desorption regeneration step). The passage 14 is closed immediately before the aromatic solvent, which is supplied to the adsorptive desulfurization tower 1, is outflowed from the adsorptive desulfurization tower 1. The mixture liquid of the aromatic solvent, the paraffinic solvent, and the sulfur compounds, which is outflowed from the adsorptive desulfurization tower 1, is fed from a passage 18 via a tank 6 to a distillation tower 4. The mixture liquid of the aromatic solvent, the paraffinic solvent, and the sulfur compounds is distillated and separated in the distillation tower 4. The separated aromatic solvent is circulated via a passage 19 to a tank 7, and it is reused. The separated paraffinic solvent is fed to the tank 8 via a passage 20 in order to reuse it in the step of recovering the gas oil and the step of removing the desorbent as described later on. On the other hand, the separated sulfur compounds are discharged from a passage 21. The sulfur compounds are mixed into heavy oil or the like. Alternatively, the separated sulfur compounds are consumed with a boiler equipped with an exhaust gas-processing apparatus. When the mixture liquid of the sulfur compounds and the aromatic solvent is subjected to the distillation separation, it is possible to stabilize the distillation separation state by recycling the sulfur compounds to the mixture liquid or mixing a slight amount of the gas oil distillate products to the mixture liquid, because both of the sulfur compound and the aromatic solvent greatly differ in the boiling point and the volume ratio.

After the desorption regeneration is sufficiently performed for the adsorptive desulfurization agent in the adsorptive desulfurization tower 1, the passage 17 is closed, and the paraffinic solvent is allowed to flow again from the passage 13 to the adsorptive desulfurization tower 1. The paraffinic solvent, which is supplied to the adsorptive desulfurization tower 1, extrudes the aromatic solvent stored in the adsorptive desulfurization tower 1 to wash the adsorptive desulfurization tower 1 (step of removing the desorbent). The mixture liquid of the aromatic solvent and the paraffinic solvent outflowed from the adsorptive desulfurization tower 1 is fed from the passage 18 via the tank 6 to the distillation tower 4. In the distillation tower 4, the mixture liquid of the aromatic solvent and the paraffinic solvent is subjected to the distillation and separation. The separated aromatic solvent is fed via a passage 19 to the tank 7 for the purpose of reuse. The separated paraffinic solvent is also circulated to the tank 8 via a passage 20 to be reused.

After the adsorptive desulfurization tower 1 is sufficiently washed, the passage 13 is closed, and the feed gas oil is supplied again from the passage 11 to the adsorptive desulfurization tower 1. The gas oil, which is supplied to the adsorptive desulfurization tower 1, extrudes the paraffinic solvent stored in the adsorptive desulfurization tower 1. The passage 18 is closed and the passage 14 is opened immediately before the gas oil, which is supplied to the adsorptive desulfurization tower 1, is outflowed from the adsorptive desulfurization tower 1. The mixture liquid of the gas oil and the paraffinic solvent, which is outflowed from the adsorptive desulfurization tower 1, is fed from the open passage 14 via the tank 5 to the distillation tower 3. The mixture liquid of the gas oil and the paraffinic solvent is distilled and separated in the distillation tower 3. The separated gas oil is circulated to the feed gas oil via the passage 15. The separated paraffinic solvent is fed via the passage 16 to the tank 8 for the purpose of reuse to be performed later on.

Thus, the paraffinic solvent is sufficiently discharged from the adsorptive desulfurization tower 1. After that, the passage 14 is closed, and the product gas oil is discharged from the open passage 12 (adsorptive desulfurization step). When the steps as described above are repeated by using the system shown in Fig. 1, it is possible to produce the gas oil having a sufficiently low sulfur concentration over a long period of time at relatively low equipment cost and running cost.

In order to obtain the gas oil distillate products having a sulfur content of about 10 ppm from the feed gas oil having a sulfur content of about 50 ppm, or in order to produce the zero-sulfur gas oil having a sulfur content of not more than 1 ppm from the sulfur-free gas oil having a sulfur content of not more than 10 ppm, it is preferable to use a production apparatus in which a plurality of adsorptive desulfurization towers, each of which has an intermediate tank at the outlet, are connected in series. In the case of the production apparatus using a plurality of adsorptive desulfurization towers, when the sulfur concentration of the product gas oil exceeds a predetermined concentration at the outlet of the most downstream adsorptive desulfurization tower of some of the adsorptive desulfurization towers used for the adsorptive desulfurization, the most downstream adsorptive desulfurization tower is connected in series to the adsorptive desulfurization tower which is prepared separately from some of the adsorptive desulfurization towers used for the adsorptive desulfurization and which is in a state immediately after the regeneration of the adsorptive desulfurization agent. On the other hand, the desorption regeneration step is performed to regenerate the adsorptive desulfurization agent in the most upstream adsorptive desulfurization tower of some of the adsorptive desulfurization towers used for the adsorptive desulfurization. When the production apparatus based on the cyclic system, which uses the plurality of adsorptive desulfurization towers, is used, it is possible to produce the gas oil having the low sulfur concentration over a longer period of time, which is economic.

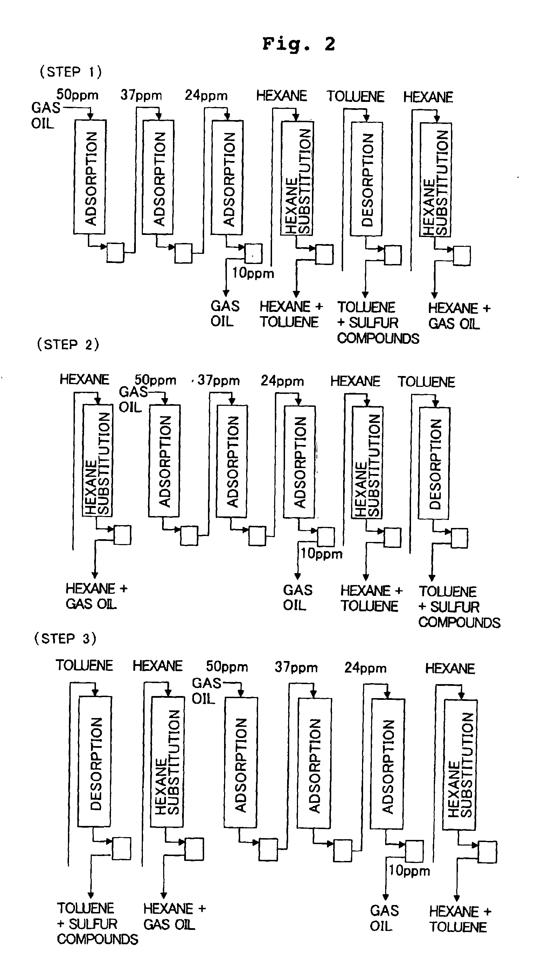

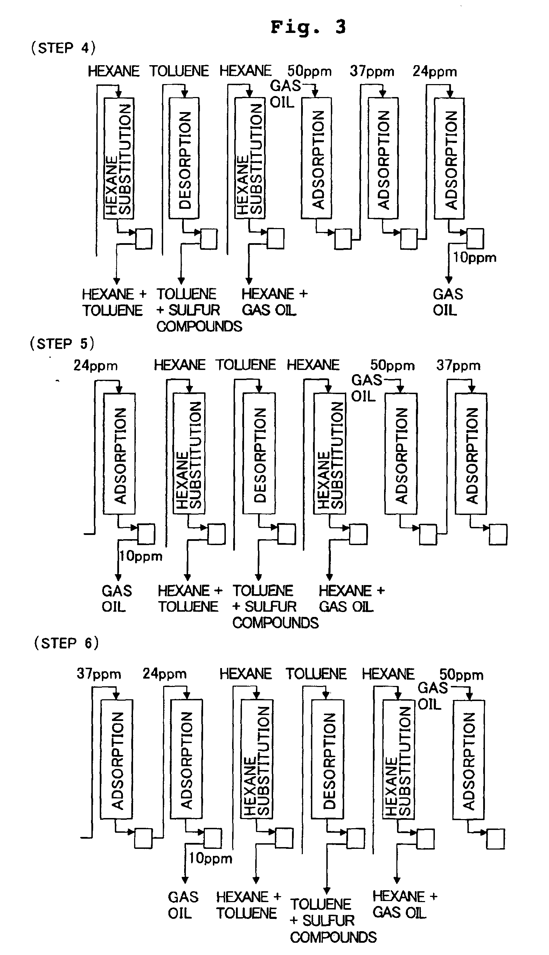

Figs. 2 and 3 show an example of the gas oil production apparatus based on the cyclic system. Each of Figs.

2 and 3 schematically shows a gas oil production apparatus based on the six tower-cyclic system which uses three towers of adsorptive desulfurization towers, one tower of substitution tower for the gas oil with hexane, one tower of desorption tower with toluene, and one tower of substitution tower for toluene with hexane respectively. As shown in (Step 1) in Fig. 2, the towers function, in the following order from the left in the drawing, as three towers of the adsorptive desulfurization towers, the substitution tower for toluene with hexane, the desorption tower with toluene, and the substitution tower for gas oil with hexane. When the sulfur concentration of the product gas oil exceeds a predetermined concentration at the outlet of the most downstream adsorptive desulfurization tower (3rd tower from the left), the most downstream adsorptive desulfurization tower (3rd tower from the left) is connected to the right-adjoining tower immediately after the regeneration of the adsorptive desulfurization agent has been performed in the right-adjoining tower, i.e., the substitution tower for toluene with hexane (4th tower from the left) as shown in (Step 2) in Fig. 2. That is, at the stage of (Step 2), the substitution tower for toluene with hexane (4th tower from the left) is changed to the most downstream adsorptive desulfurization tower. On the other hand, as shown in (Step 2) in Fig. 2, the most upstream adsorptive desulfurization tower (1st tower from the left) is switched to the substitution tower for the gas oil with hexane. The gas oil, which remains in the tower, is extruded and substituted with hexane. As described above, every time when the sulfur concentration of the product gas oil outflowed from the most downstream adsorptive desulfurization tower of the three towers utilized as the adsorptive desulfurization towers exceeds the predetermined concentration, the most downstream adsorptive desulfurization tower is connected to the right-adjoining tower immediately after the regeneration of the adsorptive desulfurization agent has been performed in the right-adjoining tower. The most upstream adsorptive desulfurization tower is washed with hexane. That is, in the case of gas oil production apparatus based on the six tower-cyclic system shown in Figs. 2 and 3, as shown in (Step 1) to (Step 6) in Figs. 2 and 3, every time when the sulfur concentration of the product gas oil outflowed from the most downstream adsorptive desulfurization tower exceeds the predetermined concentration, the step carried out in the tower (adsorption → adsorption → adsorption → hexane substitution → desorption → hexane substitution →) is shifted from the left to the right in the drawing one by one.

In the method for producing the gas oil according to the present invention, in order to remove a minute amount of adsorbed water as the pretreatment for the adsorptive desulfurization agent, it is preferable that the adsorptive desulfurization agent is dried at about 100 to 200 °C in the case of an oxidizing atmosphere such as air. However, if the temperature exceeds 200 °C, then the reaction occurs with oxygen, and the weight of the adsorptive desulfurization agent is decreased, which is not preferred. When the heat treatment is performed in a non-oxidizing atmosphere such as nitrogen as the pretreatment for the adsorptive desulfurization agent, it is preferable that the adsorptive desulfurization agent is dried at about 100 to 800 °C. If the heat treatment is performed at 400 to 800 °C, then organic matters and contained oxygen are removed, and the adsorption performance is improved, which is especially preferred.

In the method for producing the gas oil according to the present invention, the activated carbon fiber, which is used as the carbon material for the adsorptive desulfurization agent, is capable of selectively adsorbing benzothiophene such as 4-methylbenzothiophene (4-MDBT) and 4,6-dimethylbenzothiophene (4,6-DMDBT) as compounds which are difficult to be desulfurized, of the sulfur compounds contained in the gas oil. Therefore, the composition distribution of the sulfur compounds remaining in the gas oil desulfurized by the method for producing the gas oil of the present invention is different from the composition distribution of the sulfur compounds remaining in the gas oil desulfurized by the conventional hydrotreating process. In particular, it should be noticed that the remaining ratio of 4,6-DMDBT which is difficult to be desulfurized by the hydrotreating process is extremely lowered by the desulfurization method of the present invention. That is, the gas oil, which is obtained in accordance with the present invention, achieves the sulfur concentration of not more than 15 ppm. Further, the 90 % distillation temperature is scarcely changed before and after the desulfurization. It is appreciated that the desulfurization method of the present invention does not exert any harmful influence on the quality of the gas oil.

When the desulfurization method of the present invention is combined with the conventional hydrotreating, it is possible to reduce the sulfur content more efficiently. Almost all of the sulfur compounds remaining in the gas oil desulfurized by the hydrotreating are alkylbenzothiophene which is the compound difficult to be desulfurized. Therefore, when the gas oil, which has been desulfurized to give a sulfur concentration of not more than 10 ppm by the hydrotreating, is further desulfurized in accordance with the desulfurization method of the present invention, it is possible to selectively adsorb and remove alkylbenzothiophene. Therefore, it is possible to efficiently obtain the gas oil having a sulfur concentration of not more than 1 ppm. When the hydrotreating is performed as a preliminary step for the desulfurization method of the present invention, the nitrogen compounds are removed from the gas oil distillate products. Therefore, the desulfurization effect, which is brought about by the adsorptive desulfurization agent, is further improved.

The activated carbon, especially the activated carbon fiber, which is used for the adsorptive desulfurization agent of the present invention, has such a property that polycyclic aromatic compounds, especially aromatic compounds having two or more rings are selectively adsorbed. Therefore, the ratio of polycyclic aromatic compounds remaining in the gas oil refined by the desulfurizing method of the present invention is lower than the ratio of polycyclic aromatic compounds remaining in the gas oil desulfurized and refined by the conventional hydrotreating. That is, as for the gas oil obtained by the present invention, it is achieved that the sulfur concentration is not more than 15 ppm, and the ratio of aromatic compounds having two or more rings is not more than 7 % with respect to the total aromatic content. It is achieved that the ratio of aromatic compounds having three rings with respect to the total aromatic content is less than 0.5 %. Therefore, it is appreciated that the gas oil, which is desirable in view of the environment, is obtained when the desulfurization method of the present invention is used.

When the adsorption-desulfurized gas oil obtained by the production method of the present invention is mixed with any synthetic gas oil such as GTL (gas to liquid), it is possible to efficiently produce the gas oil in which the sulfur content is extremely small, and the polycyclic aromatic compound content is extremely small. When the sulfur content is removed to be not more than 1 ppm, it is also possible to reduce the sulfur poisoning of the noble metal catalyst for hydrogenizing the benzene ring, i.e., so-called the nuclear hydrogenation catalyst. When the sulfur content is reduced to be not more than 1 ppm by the adsorptive desulfurization, and the hydrogenation is performed with the noble metal type catalyst for benzene ring hydrogenation thereafter, then it is possible to efficiently produce the gas oil containing neither sulfur content nor aromatic content.

Example 1

In Example 1, those prepared as the adsorptive desulfurization agents (hereinafter referred to as "adsorbents") respectively were activated carbon fiber A having a specific surface area of about 2,000 $m^2$/g, activated carbon fiber B having a specific surface area of about 1,000 $m^2$/g, and powder activated carbon Darco KB produced by Aldrich having a specific surface area of 1,500 $m^2$/g. The adsorption characteristics of the respective adsorbents were measured.

Pretreatment for Adsorbent

The respective adsorbents were dried at 150 °C for 3 hours in a pretreatment for the respective adsorbent prepared in Example 1. For the purpose of comparison with the three adsorbents described above, there were prepared adsorbents of NaY type zeolite powder HSZ-320 NAA produced by Tosoh Corporation ($SiO_2/Al_2O$, ratio: 5.5 mol/mol, $Na_2O/Al_2O_3$ ratio: 1.01 mol/mol, specific surface area: 700 $m^2$/g, crystallite diameter: 0.2 to 0.4 μm, particle diameter: 7 to 10 μm), HY type zeolite powder HSZ-320 HOA produced by Tosoh Corporation ($SiO_2/Al_2O$, ratio: 5.7 mol/mol, $Na_2O$: 3.8 % by weight, specific surface area: 550 $m^2$/g, crystallite diameter: 0.2 to 0.4 μm, particle diameter: 6 to 10 μm), HSY type zeolite powder HSZ-331 HSA produced by Tosoh Corporation ($SiO_2/Al_2O$, ratio: 6.2 mol/mol, $Na_2O$: 0.20 % by weight, specific surface area: 650 $m^2$/g, crystallite diameter: 0.7 to 1.0 μm, particle diameter: 2 to 4 μm), HUS Y type zeolite powder HSZ-330 HUA produced by Tosoh Corporation ($SiO_2/Al_2O_3$ ratio: 6.0 mol/mol, $Na_2O$: 0.21 % by weight, specific surface area: 550 $m^2$/g, crystallite diameter: 0.2 to 0.4 μm, particle diameter: 6 to 8 μm), KL type zeolite powder HSZ-500 KOA produced by Tosoh Corporation ($SiO_2/Al_2O_3$ ratio: 6.1 mol/mol, $Na_2O$: 0.21 % by weight, $K_2O$: 16.8 % by weight, specific surface area: 280 $m^2$/g, crystallite diameter: 0.2 to 0.4 μm, particle diameter: 2 to 4 μm), H mordenite powder HSZ-640 HOA produced by Tosoh Corporation ($SiO_2/Al_2O$, ratio: 18.3 mol/mol, $Na_2O$: 0.04 % by weight, specific surface area: 380 $m^2$/g, crystallite diameter: 0.1 x 0.5 μm, particle diameter: 10 to 12 μm), Na mordenite powder HSZ-642 NAA produced by Tosoh Corporation ($SiO_2/Al_2O_3$ ratio: 18.3 mol/mol, $Na_2O/Al_2O_3$ ratio: 1.04 mol/mol, specific surface area: 360 $m^2$/g, crystallite diameter: 0.1 x 0.5 μm, particle diameter: 10 to 12 μm), K ferrierite powder HSZ-720 KOA produced by Tosoh Corporation ($SiO_2/Al_2O_3$ ratio: 18.2 mol/mol, $Na_2O$: 1.3 % by weight, $K_2O$: 5.5 % by weight, specific surface area: 170 $m^2$/g, crystallite diameter: not more than 1 μm, particle diameter: 20 to 30 μm), and NaX type zeolite powder F-9 produced by Wako Pure Chemical Industries, Ltd. ($SiO_2/Al_2O$, ratio: 2.5 mol/mol, specific surface area: 591 $m^2$/g) respectively. These adsorbents were dried at 400 °C for 3 hours as the pretreatment respectively. Further, silica gel WAKOGEL-G produced by Wako Pure Chemical Industries, Ltd. (specific surface area: 687 $m^2$/g), activated alumina F-200 produced by Alcoa (specific surface area: 350 $m^2$/g), and copper oxide-carrying alumina NK-311 produced by Oriental Catalyst (copper content: 7.6 mass %, specific surface area: 264 $m^2$/g) were prepared and pulverized respectively, followed by being dried at 400 °C for 3 hours as the pretreatment. Further, an adsorbent, in which $NH_4$ β-zeolite powder HSZ-930 NHA produced by Tosoh Corporation ($SiO_2/Al_2O_3$ ratio: 27 mol/mol, Na: 0.02 % by weight, specific surface area after calcination: 630 $m^2$/g, crystallite diameter: 0.02 to 0.04 μm, particle diameter: 3 to 6 μm) was calcined at 650°C for 3 hours to obtain the proton type, was also prepared.

Adsorptive Desulfurization Performance 1

The adsorption capacity of DBT was measured for the various adsorbents prepared in this embodiment by using a toluene solution containing dibenzothiophene (DBT) by 10 % by weight as a sample assuming the gas oil distillate products. DBT (produced by Tokyo Kasei Kogyo Co., Ltd., special grade dibenzothiophene) was contained in the toluene solution. 1.0 g of each of the adsorbents was immersed at room temperature for not less than 24 hours in 4.0 g of 10 % by weight DBT/toluene solution to measure the contents of the sulfur compounds before and after the immersion by the gas chromatography. Thus, the adsorption capacity was measured. DBT and toluene are in a relation of the competitive adsorption with respect to the adsorbent. Therefore, the sample solution is under a severe condition for the respective adsorbents as compared with the actual gas oil distillate products in which the content of aromatic compounds is not more than 30 % by weight. Obtained results are shown in Table 1. As clarified from Table 1, it has been revealed that the activated carbon fibers A, B and the powder activated carbon have the more excellent adsorptive desulfurization performance as compared with the adsorbents such as zeolite, silica gel, and alumina. The adsorption capacity of the activated carbon fiber B having the specific surface area of about 1,000 $m^2/g$ is larger than that of the powder activated carbon Darco KB having the specific surface area of 1,500 $m^2/g$. It has been revealed that the adsorptive desulfurization performance of the activated carbon fiber is more excellent than that of the powder activated carbon.

Table 1

| Type of adsorbent | Adsorption capacity (g-S/kg-adsorbent) |
|---|---|
| Activated carbon fiber A | 52 |
| Activated carbon fiber B | 46 |
| Powder activated carbon Darco KB | 25 |
| Zeolite HSZ-320 NAA | 0 |
| Zeolite HSZ-320 HOA | 6 |
| Zeolite HSZ-331 HSA | 11 |
| Zeolite HSZ-330 HUA | 8 |
| Zeolite HSZ-500 KOA | -2 |
| Zeolite HSZ-640 HOA | 0 |
| Zeolite HSZ-642 NAA | -1 |
| Zeolite HSZ-720 KOA | -1 |
| Zeolite F-9 | 16 |
| Silica gel WAKOGEL-G | 1 |
| Activated alumina F-200 | 3 |
| Copper-carrying alumina NK-311 | -1 |
| Zeolite HSZ-930 NHA | 4 |

Adsorptive Desulfurization Performance 2

Activated carbon fiber A, activated carbon fiber B, zeolite HSZ-320 NAA, zeolite HSZ-331 HSA, zeolite F-9, and zeolite HSZ-930 NHA, which were included in the various adsorbents prepared for the adsorptive desulfurization performance 1, were evaluated for the adsorptive desulfurization performance by using actual gas oil. 3.0 g of each of the adsorbents was immersed at room temperature for not less than 24 hours in 20.0 g of super deep desulfurization gas oil A (sulfur content: 37 ppm) and super deep desulfurization gas oil B (sulfur content: 30 ppm) with sulfur concentrations having been previously measured respectively to measure sulfur concentrations after the immersion. Obtained results are shown in Table 2. As clarified from Table 2, it has been revealed that the activated carbon fibers A, B have more excellent adsorptive desulfurization performance as compared with zeolite. The sulfur concentration was measured by the fluorescent X-ray analysis. Each of the sulfur concentrations before and after the immersion is represented as the sulfur content obtained by converting the concentration of the sulfur compounds contained in the gas oil into the sulfur weight (the same presentation will be also used in the followings).

Table 2

| Type of adsorbent | Sulfur content of super deep desulfurization gas oil A (ppm) | Sulfur content of super deep desulfurization gas oil B (ppm) |
|---|---|---|
| Activated carbon fiber A | 2 | 2 |
| Activated carbon fiber B | 9 | 8 |

Table 2 (continued)

| Type of adsorbent | Sulfur content of super deep desulfurization gas oil A (ppm) | Sulfur content of super deep desulfurization gas oil B (ppm) |
|---|---|---|
| Zeolite HSZ-320 NAA | 31 | 28 |
| Zeolite HSZ-331 HSA | 27 | 23 |
| Zeolite F-9 | 33 | 26 |
| Zeolite HSZ-930 NHA | 24 | 21 |

Adsorptive Desulfurization Performance 3

Activated carbon fiber A, zeolite HSZ-320 NAA, zeolite HSZ-331 HSA, zeolite F-9, and zeolite HSZ-930 NHA, which were included in the various adsorbents prepared for the adsorptive desulfurization performance 1, were evaluated for the adsorptive desulfurization performance by using gasoline base. 6.0 g of each of the adsorbents was immersed at room temperature for not less than 24 hours in 40.0 g of catalytic cracking (FCC) gasoline (sulfur content: 62 ppm) with a sulfur concentration having been previously measured to measure a sulfur concentration in the FCC gasoline after the immersion. Obtained results are shown in Table 3. As clarified from Table 3, it has been revealed that the activated carbon fiber A has more excellent adsorptive desulfurization performance as compared with zeolite.

Table 3

| Type of adsorbent | Sulfur content of FCC gasoline (ppm) |
|---|---|
| Activated carbon fiber A | 25 |
| Zeolite HSZ-320 NAA | 47 |
| Zeolite HSZ-331 HSA | 38 |
| Zeolite F-9 | 33 |
| Zeolite HSZ-930 NHA | 49 |

Desorption Regeneration of Activated Carbon

The activated carbon fiber A was used as the adsorbent for the experiment for the adsorptive desulfurization performance 1 described above. After that, the temperature was raised for the activated carbon fiber A to 500 °C at a temperature-raising speed of 100 °C/hr in a nitrogen atmosphere, and then the activated carbon fiber was heated at 500 °C for 2 hours. After the cooling, an experiment was performed in the same manner as for the adsorptive desulfurization performance 1. As a result, the adsorption capacity was 84 (g-S/kg-adsorbent). The regeneration of the adsorbent was confirmed.

Example 2

In Example 2, the following thirteen adsorbents A to M were prepared to determine adsorption capacities with respect to the sulfur contents in the gas oil by using the adsorbents respectively. For the purpose of comparison, an adsorbent N having a micropore external pore volume of Vext of 0 cm$^3$/g was prepared to determine the adsorption capacity under the same condition. However, the following parameters are used for the adsorbents A to N as described later on. That is, Sext represents the micropore external specific surface area (m$^2$/g), Vext represents the micropore external pore volume (cm$^3$/g), Smicro represents the micropore specific surface area (m$^2$/g), Vmicro represents the micropore volume (cm$^3$/g), D represents the density conversion coefficient (0.001547 when nitrogen is used as the gas) (cm$^3$ liq/cm$^3$ (STP)), Sa represents the total specific surface area (m$^2$/g), Va represents the total pore volume (cm$^3$/g), and Da represents the average pore diameter. The respective parameters were determined by using the results of the measurement based on the nitrogen adsorption method and the expressions (2) to (8) described above.
Powdery activated carbon fiber was used as the adsorbent A. In relation to the adsorbent A, Sa was 2,669 m$^2$/g, Va was 1.36 cm$^3$/g, Da was 20 angstroms, Smicro was 2,630 m$^2$/g, Vmicro was 1.29 cm$^3$/g, Sext was 40 m$^2$/g, Vext was 0.07 cm$^3$/g, and Smicro x 2 x Vext/Sext was 9.2 cm$^3$/g.
Powdery activated carbon fiber was used as the adsorbent B. In relation to the adsorbent B, Sa was 1,155 m$^2$/g, Va was 0.44 cm$^3$/g, Da was 15 angstroms, Smicro was 1,137 m$^2$/g, Vmicro was 0.40 cm$^3$/g, Sext was 18 m$^2$/g,

Vext was 0.03 cm$^3$/g, and Smicro x 2 x Vext/Sext was 4.3 cm$^3$/g.

Powdery activated carbon fiber was used as the adsorbent C. In relation to the adsorbent C, Sa was 2,090 m$^2$/g, Va was 1.04 cm$^3$/g, Da was 20 angstroms, Smicro was 2,071 m$^2$/g, Vmicro was 1.01 cm$^3$/g, Sext was 19 m$^2$/g, Vext was 0.03 cm$^3$/g, and Smicro x 2 x Vext/Sext was 9.2 cm$^3$/g. The adsorbent C was used in the fibrous state as it was.

Activated carbon fiber (W-15W produced by Unitica Ltd.) was used as the adsorbent D. In relation to the adsorbent D, Sa was 1,390 m$^2$/g, Va was 1.30 cm$^3$/g, Da was 37 angstroms, Smicro was 1,369 m$^2$/g, Vmicro was 1.26 cm$^3$/g, Sext was 21 m$^2$/g, Vext was 0.04 cm$^3$/g, and Smicro x 2 x Vext/Sext was 4.6 cm$^3$/g. The adsorbent D was used in the fibrous state as it was.

Activated carbon fiber (FR-15 produced by Kuraray Chemical Co., Ltd.) was used as the adsorbent E. In relation to the adsorbent E, Sa was 1,515 m$^2$/g, Va was 0.54 cm$^3$/g, Da was 14 angstroms, Smicro was 1,513 m$^2$/g, Vmicro was 0.54 cm$^3$/g, Sext was 1 m$^2$/g, Vext was 0.0012 cm$^3$/g, and Smicro x 2 x Vext/Sext was 3.7 cm$^3$/g. The adsorbent E was used in the fibrous state as it was.

Activated carbon fiber (FR-20 produced by Kuraray Chemical Co., Ltd.) was used as the adsorbent F. In relation to the adsorbent F, Sa was 2,454 m$^2$/g, Va was 0.86 cm$^3$/g, Da was 14 angstroms, Smicro was 2,445 m$^2$/g, Vmicro was 0.85 cm$^3$/g, Sext was 8 m$^2$/g, Vext was 0.01 cm$^3$/g, and Smicro x 2 x Vext/Sext was 7.4 cm$^3$/g. The adsorbent F was used in the fibrous state as it was.

Activated carbon fiber (FR-20 produced by Kuraray Chemical Co., Ltd.) was used as the adsorbent G. In relation to the adsorbent G, Sa was 2,294 m$^2$/g, Va was 0.81 cm$^3$/g, Da was 14 angstroms, Smicro was 2,285 m$^2$/g, Vmicro was 0.80 cm$^3$/g, Sext was 9 m$^2$/g, Vext was 0.01 cm$^3$/g, and Smicro x 2 x Vext/Sext was 7.0 cm$^3$/g. The adsorbent G was used in the fibrous state as it was.

Activated carbon fiber (FR-25 produced by Kuraray Chemical Co., Ltd.) was used as the adsorbent H. In relation to the adsorbent H, Sa was 2,749 m$^2$/g, Va was 0.96 cm$^3$/g, Da was 14 angstroms, Smicro was 2,741 m$^2$/g, Vmicro was 0.94 cm$^3$/g, Sext was 8 m$^2$/g, Vext was 0.01 cm$^3$/g, and Smicro x 2 x Vext/Sext was 8.8 cm$^3$/g. The adsorbent H was used in the fibrous state as it was.

Activated carbon fiber (FE-620-7 produced by Toho Rayon Co., Ltd.) was used as the adsorbent I. In relation to the adsorbent I, Sa was 1,916 m$^2$/g, Va was 0.66 cm$^3$/g, Da was 14 angstroms, Smicro was 1,913 m$^2$/g, Vmicro was 0.66 cm$^3$/g, Sext was 3 m$^2$/g, Vext was 0.01 cm$^3$/g, and Smicro x 2 x Vext/Sext was 6.6 cm$^3$/g. The adsorbent I was used in the fibrous state as it was.

Activated carbon fiber in felt form (FT-300-20 produced by Kuraray Chemical Co., Ltd.) was used as the adsorbent J. In relation to the adsorbent J, Sa was 2,119 m$^2$/g, Va was 0.75 cm$^3$/g, Da was 14 angstroms, Smicro was 2,115 m$^2$/g, Vmicro was 0.75 cm$^3$/g, Sext was 3 m$^2$/g, Vext was 0.01 cm$^3$/g, and Smicro x 2 x Vext/Sext was 7.6 cm$^3$/g.

Powdery activated carbon was used as the adsorbent K. In relation to the adsorbent K, Sa was 996 m$^2$/g, Va was 0.35 cm$^3$/g, Da was 14 angstroms, Smicro was 989 m$^2$/g, Vmicro was 0.34 cm$^3$/g, Sext was 7 m$^2$/g, Vext was 0.01 cm$^3$/g, and Smicro x 2 x Vext/Sext was 3.3 cm$^3$/g.

Powdery activated carbon (Max Soap produced by Kansai Coke and Chemicals Co., Ltd.) was used as the adsorbent L. In relation to the adsorbent L, Sa was 3,305 m$^2$/g, Va was 1.67 cm$^3$/g, Da was 20 angstroms, Smicro was 3,264 m$^2$/g, Vmicro was 1.60 cm$^3$/g, Sext was 42 m$^2$/g, Vext was 0.07 cm$^3$/g, and Smicro x 2 x Vext/Sext was 11.3 cm$^3$/g.

Powdery activated carbon was used as the adsorbent M. In relation to the adsorbent M, Sa was 2,264 m$^2$/g, Va was 0.80 cm$^3$/g, Da was 14 angstroms, Smicro was 2,260 m$^2$/g, Vmicro was 0.79 cm$^3$/g, Sext was 4 m$^2$/g, Vext was 0.01 cm$^3$/g, and Smicro x 2 x Vext/Sext was 7.7 cm$^3$/g.

Activated carbon fiber (FR-10 produced by Kuraray Chemical Co., Ltd.) was used as the adsorbent N. In relation to the adsorbent N, Sa was 1,101 m$^2$/g, Va was 0.39 cm$^3$/g, Da was 14 angstroms, Smicro was 1,090 m$^2$/g, Vmicro was 0.39 cm$^3$/g, Sext was 11 m$^2$/g, Vext was 0.00 cm$^3$/g, and Smicro x 2 x Vext/Sext was 0.0 cm$^3$/g. The adsorbent N was used in the fibrous state as it was.

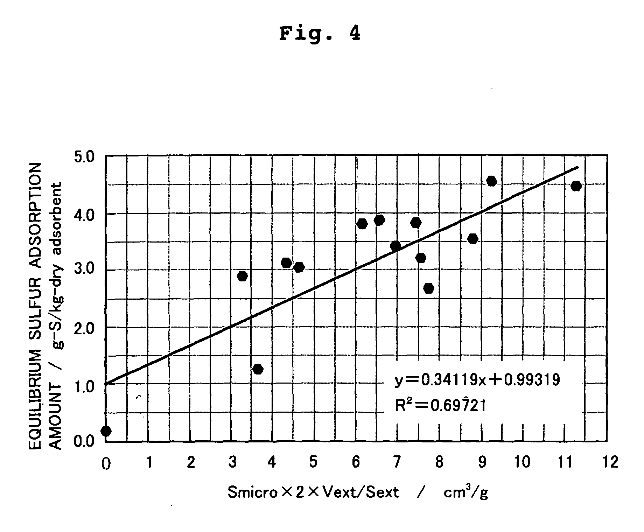

As a pretreatment, the adsorbents A to N were dried at 150 °C for 3 hours. After that, 1.0 g of each of the adsorbents was immersed at 10 °C for not less than 24 hours in 20.0 g of gas oil (sulfur concentration: 370 ppm, density: 0.8421 g/ml (15 °C), nitrogen content (weight after conversion into weight of nitrogen in nitrogen compounds): 10 ppm, boiling point range: 193.5 to 361.5 °C, 10 % distillation temperature: 270.0 °C, 90 % distillation temperature: 343.5 °C) to determine the adsorption capacity by measuring the sulfur concentration after the immersion. The gas oil, which was used in this experiment, was obtained by previously hydrotreating a feed gas oil. Fig. 4 shows the relationship between Smicro x 2 x Vext/Sext and the adsorption capacity. As clarified from Fig. 4, it has been revealed that as Smicro x 2 x Vext/Sext is larger, the adsorption capacity becomes larger. According to this result, it is appreciated that Smicro x 2 x Vext/Sext, which is the desulfurization adsorption parameter found out by the inventors, determines the adsorption amount of the sulfur content. In particular, when the value of Smicro x 2 x Vext/Sext is not less than 3.0 cm$^3$/g, the adsorption capacity is not less than 2.0 g-S/kg-dry adsorbent. In particular, when the value of Smicro x 2 x Vext/Sext is not less than 5.0 cm$^3$/g, the adsorption capacity exceeds 2.5 g-S/kg-dry adsorbent. It has been revealed that the adsorbent, which has the excellent adsorptive desulfurization performance, can be obtained.

Example 3

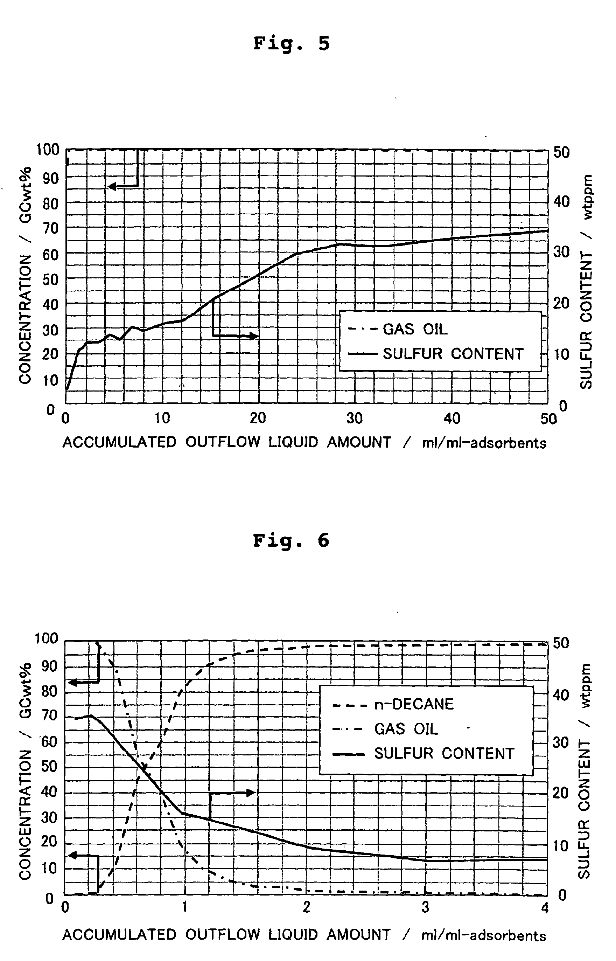

In Example 3, the adsorbent H prepared in Example 2 was used as the adsorbent. At first, the adsorbent was dried at 150 °C for 3 hours, and then 19.6 g of the adsorbent was charged into an adsorption tower (hereinafter referred to as "column") having a length of 600 mm and an internal volume of 54 ml. After charging the adsorbent, gas oil (sulfur concentration: 38 ppm, density: 0.8377 g/ml (15 °C), nitrogen content: 0.6 ppm, boiling point range: 206.0 to 367.0 °C, 10 % distillation temperature: 271.0 °C, 90 % distillation temperature: 347.5 °C) was allowed to flow through the column at 2 ml/min. After that, the sulfur content contained in the gas oil and the concentration of the gas oil with respect to the accumulated outflow amount of the gas oil outflowed from the column were measured. The change is shown in Fig. 5. The sulfur content was measured by the fluorescent X-ray analysis. However, the left vertical axis in Fig. 5 indicates the concentration of the gas oil, and the right vertical axis indicates the concentration of the sulfur content. The accumulated outflow amount along with the horizontal axis in Fig. 5 means the ratio of the outflow amount of the outflow liquid from the column to the volume of the adsorbent. As shown in Fig. 5, the initial concentration of the sulfur content was 5 ppm which was low. It is appreciated that the sulfur content is sufficiently adsorbed by the adsorbent. The adsorption amount was determined from Fig. 5. As a result, the adsorption amount was 26 mg. In this experiment, the adsorption amount was determined by integrating the amount of the decrease in the sulfur content of the gas oil outflowed from the column with respect to the sulfur content of the gas disallowed to flow through the column according to Fig. 5. A distillate product, which was obtained by pooling the outflow liquid until an accumulated outflow liquid amount of 3.3 ml/ml-adsorbents, was regarded as the adsorption-desulfurized gas oil.

Subsequently, n-decane was allowed to flow through the column at 2 ml/min. During this process, the concentration of the gas oil with respect to the accumulated outflow amount of the mixture liquid outflowed from the column, the concentration of n-decane, and the sulfur content contained in the mixture liquid were measured. The change is shown in Fig. 6. However, the left vertical axis in Fig. 6 indicates the concentrations of the gas oil and n-decane, and the right vertical axis indicates the concentration of the sulfur content. As shown in Fig. 6, as the flow of n-decane was advanced, the outflow amount of the gas oil was decreased, and the concentration was finally decreased to approximately zero. That is, it is appreciated that almost all of the gas oil remaining in the column outflows by allowing n-decane to flow through the column. The desorption amount of the sulfur compounds determined from Fig. 6 was not more than the measurement accuracy (1 mg). No sulfur compound was desorbed. The desorption amount of the sulfur compounds was determined by integrating the sulfur content contained in the outflow liquid outflowed from the column according to Fig. 6.

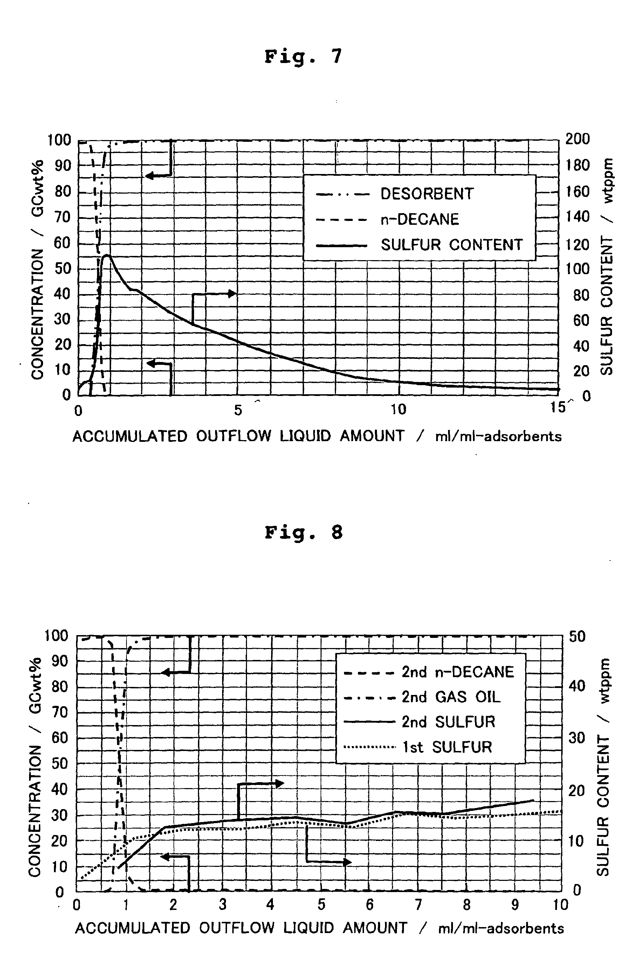

Subsequently, toluene (desorbent), which was heated to 100 °C, was allowed to flow through the column at 2 ml/min. During this process, the concentration of the desorbent with respect to the accumulated outflow amount of the mixture liquid outflowed from the column, the concentration of n-decane, and the sulfur content contained in the mixture liquid were measured. The change is shown in Fig. 7. However, the left vertical axis in Fig. 7 indicates the concentrations of the desorbent and n-decane, and the right vertical axis indicates the concentration of the sulfur content. As shown in Fig. 7, when toluene is allowed to flow as the desorbent through the column, the outflow amount of the sulfur content is initially increased. However, a peak was formed at a certain accumulated outflow amount. After that, the outflow amount of the sulfur content was decreased, and the sulfur concentration was finally not more than 10 ppm. That is, it is appreciated that the sulfur compounds having been adsorbed in the column are eluted by allowing toluene to flow through the column. The desorption amount of the sulfur content determined from Fig. 7 was 22 mg. According to this value, it was revealed that the desorbent contained in the column was desorbed and regenerated approximately completely.

Subsequently, n-decane was allowed to flow again through the column at 2 ml/min, and then the gas oil was allowed to flow through the column at 2 ml/min. During this process, the concentration of the gas oil with respect to the accumulated outflow amount of the mixture liquid outflowed from the column, the concentration of n-decane, and the sulfur content contained in the mixture liquid were measured. The change is shown in Fig. 8. For the purpose of comparison, Fig. 8 also shows the change of the sulfur content upon the first flow of the gas oil. However, the left vertical axis in Fig. 8 indicates the concentrations of the gas oil and n-decane, and the right vertical axis indicates the concentration of the sulfur content. As shown in Fig. 8, approximately identical curves were obtained for the first and second operations in relation to the change of the sulfur content with respect to the accumulated outflow amount. This fact means that the adsorption characteristics of the adsorptive desulfurization agent are approximate identical in the first and second operations. Therefore, it is appreciated that the adsorbent contained in the column was regenerated approximately completely by the desorption regeneration step shown in Fig. 7.

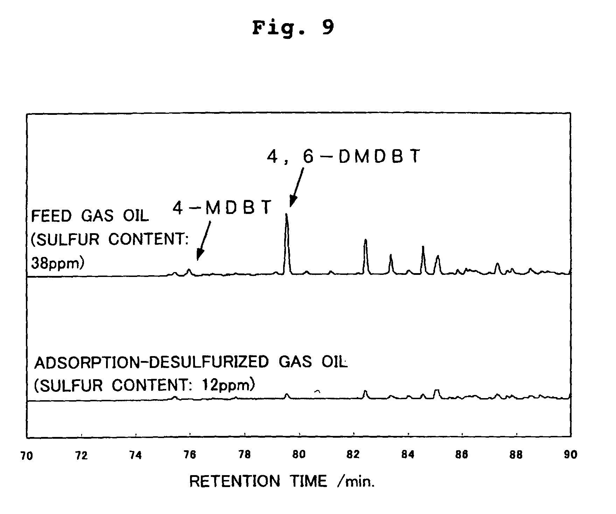

Subsequently, the types and the concentrations of the sulfur compounds contained in the feed gas oil used in this embodiment and the adsorption-desulfurized gas oil obtained by the adsorptive desulfurization step described above were analyzed by using a gas chromatograph-chemiluminescence sulfur detector (GC-SCD produced by Shimadzu Corporation, column: SUPELCO SPB1 0.25 mm x 100 m). An obtained result is shown in Fig. 9. As clarified from Fig. 9, 4,6-DMDBT, which was the sulfur compound most dominantly contained in the feed gas oil, was scarcely detected in the adsorption-desulfurized gas oil. That is, it has been revealed that 4,6-DMDBT, which is a compound difficult to be desulfurized, can be selectively removed by the method for producing the gas oil in this embodiment.

Table 4 summarizes the properties and the compositions of the feed gas oil used in this embodiment and the adsorption-desulfurized gas oil produced in this embodiment. For the purpose of comparison, Table 4 also shows the properties and the compositions of the hydrotreated gas oil.

Table 4

| | Feed gas oil | Adsorption-desulfurized gas oil (first) | Adsorption-desulfurized gas oil (second) | Hydrorefined gas oil |
|---|---|---|---|---|
| Sulfur content (wt ppm) | 38 | 12 | 11 | 8 |
| Sulfur content of 4-MDBT (wt ppm) | 0.8 | 0.2 | - | 0.4 |
| Sulfur content of 4,6-DMDBT (wt ppm) | 7 | 0.3 | - | 2 |
| Ratio of 4,6-DMDBT to total sulfur content (%) | 18 | 3 | - | 20 |
| Total aromatic content (wt %) | 17.5 | 15.5 | 14.4 | 14.0 |
| Aromatic compounds with 1 ring (wt %) | 16.0 | 14.9 | 13.9 | 12.9 |
| Aromatic compounds with 2 rings (wt %) | 1.20 | 0.49 | 0.40 | 0.92 |
| Aromatic compounds with 2.5 rings (wt %) | 0.18 | 0.06 | 0.03 | 0.11 |
| Aromatic compounds with 3 rings (wt %) | 0.17 | 0.02 | 0.01 | 0.07 |
| Ratio of aromatic compounds with 2 or more rings to total aromatic content (%) | 8.86 | 3.68 | 3.06 | 7.86 |
| Ratio of aromatic compounds with 3 rings to total aromatic content (%) | 0.97 | 0.13 | 0.07 | 0.50 |
| Density (15 °C) (g/ml) | 0.8377 | 0.8342 | 0.8338 | 0.8336 |
| Color (Saybolt) | +6 | not less than +30 | not less than +30 | -5 |
| Distillation property | | | | |
| Initial distillation point | 206.0 | 201.5 | - | 173.0 |
| 5 % distillation point | 258.0 | 255.0 | - | 234.0 |
| 10 % distillation point | 271.0 | 269.0 | - | 256.5 |
| 20 % distillation point | 284.0 | 283.0 | - | 275.5 |
| 30 % distillation point | 293.5 | 292.5 | - | 286.0 |
| 40 % distillation point | 301.0 | 300.0 | - | 294.5 |
| 50 % distillation point | 308.0 | 307.0 | - | 302.5 |
| 60 % distillation point | 315.0 | 314.5 | - | 310.0 |

Table 4 (continued)

| | Feed gas oil | Adsorption-desulfurized gas oil (first) | Adsorption-desulfurized gas oil (second) | Hydrorefined gas oil |
|---|---|---|---|---|
| 70 % distillation point | 323.5 | 322.5 | - | 319.5 |
| 80 % distillation point | 334.0 | 333.0 | - | 329.5 |
| 90 % distillation point | 347.5 | 347.0 | - | 344.0 |
| 95 % distillation point | 358.0 | 357.0 | - | 356.0 |
| 97 % distillation point | 356.0 | 363.5 | - | 362.0 |
| End point | 367.0 | 366.0 | - | 362.5 |

As clarified from Table 4, in the case of the adsorption-desulfurized gas oil produced in this embodiment, the aromatic content, especially the aromatic content of aromatic compounds having two or more rings is reduced as compared with the hydrotreated oil. In particular, it should be noticed that the ratios of the aromatic contents of aromatic compounds having not less than two rings and aromatic compounds having not less than three rings with respect to the total aromatic content are remarkably lowered, although the weight of the total aromatic content is not lowered so much as compared with the feed gas oil. It is appreciated that the color of the gas oil is remarkably improved as compared with the hydrotreated gas oil (not less than +30). Further, the ratio of the sulfur compound of 4,6-DMDBT to the total sulfur content is 3 % which is an extremely low value. It has been revealed that the adsorbent used in this embodiment can selectively adsorb 4,6-DMDBT. As clarified from Table 4, the 90 % distillation point is compared such that the 90 % distillation point of the feed gas oil is 347.5 °C, while the 90 % distillation point of the gas oil after the adsorptive desulfurization is 347.0 °C which is approximately the same value as that of the feed gas oil. That is, it has been revealed that the method for producing the gas oil based on the adsorptive desulfurization used in this embodiment makes it possible to produce the gas oil without changing the characteristics of the gas oil itself while reducing the sulfur content contained in the gas oil.

Example 4

In Example 4, the adsorbent J prepared in Example 2 was used as the adsorbent. The adsorbent was dried at 150 °C for 3 hours in the pretreatment, and then 17.3 g in total of the adsorbent was charged to two columns each having a length of 600 mm and an internal volume of 54 ml. Gas oil (sulfur concentration: 38 ppm, density: 0.8377 g/ml (15 °C), nitrogen content: 0.6 ppm, boiling point range: 206.0 to 367.0 °C, 10 % distillation temperature: 271.0 °C, 90 % distillation temperature: 347.5 °C) was allowed to flow through the columns charged with the adsorbent at 2 ml/min. After that, the temperature of the columns was raised by the heating from room temperature to 160 °C. The nitrogen gas was supplied to the columns at a pressure of 1.5 kgf/cm$^2$ G (0.15 MPa G) at a flow rate of 3 ml/min to extrude and recover the gas oil from the columns in accordance with the pressure of the nitrogen gas. The recovery amount of the gas oil was 70 ml.

Subsequently, toluene was allowed to flow through the columns at 2 ml/min. According to the concentration of the gas oil contained in toluene outflowed from the columns, it was revealed that the amount of the gas oil remaining in the columns was 11 ml. Subsequently, the temperature of the columns was raised by the heating from room temperature to 160 °C. The nitrogen gas was supplied to the columns at a pressure of 1.5 kgf/cm$^2$ G (0.15 MPa G) at a flow rate of 3 ml/min to extrude and recover toluene from the columns in accordance with the pressure of the nitrogen gas. The recovery amount of toluene was 74 ml. After the recovery of toluene, the gas oil was allowed to flow through the columns again. According to the concentration of toluene contained in the gas oil outflowed from the columns, it was revealed that the amount of toluene remaining in the columns was 10 ml. As described above, it has been confirmed that about 90 % of the liquid in the columns can be recovered by using the pressure of the nitrogen gas.

Example 5

Experiment of Immersion Adsorption for Fuel Oil

The adsorptive desulfurization performance with gasoline base was evaluated for zeolite HSZ-320 NAA, zeolite F-9, activated carbon fiber H, a mixture obtained by mixing zeolite HSZ-320 NAA and activated carbon fiber H at a ratio of 50 mass %: 50 mass %, and a mixture obtained by mixing zeolite F-9 and activated carbon fiber H at a ratio of 50 mass %: 50 mass %. Each of the adsorbents was immersed at 10 °C for not less than 24 hours in FCC gasoline (aromatic content: 21 % by weight, total sulfur content: 31 ppm, density: 0.7283 g/ml at 15 °C, nitrogen content: 10 ppm, boiling point range: 33.5 to 212.0 °C) at a ratio of FCC gasoline: adsorbent = 20g: 2 g to measure the sulfur concentrations in the fuel oil before and after the immersion. The sulfur concentrations after the immersion are shown in Tables 5 and 6. It is appreciated that the sulfur concentration is lowered in the case of 50 mass % zeolite F-9 + 50 mass % activated carbon fiber H as compared with the case of 100 mass % zeolite F-9 and that the sulfur concentration is lowered in the case of 50 mass % zeolite HSZ-320 NAA + 50 mass % activated carbon fiber H as compared with the case of 100 mass % zeolite HSZ-320 NAA. It is possible to confirm the effectiveness of the combination with the activated carbon fiber.

Table 5

| Type of adsorbent | Sulfur content of FCC gasoline (relative value) |
| --- | --- |
| 100 mass % zeolite HSZ-320 NAA | 100 |
| 100 mass % activated carbon fiber H | 60 |
| 50 mass % zeolite HSZ-320 NAA + 50 mass % activated carbon fiber H | 66 |

Table 6

| Type of adsorbent | Sulfur content of FCC gasoline (relative value) |
| --- | --- |
| 100 mass % zeolite F-9 | 100 |
| 100 mass % activated carbon fiber H | 100 |
| 50 mass % zeolite F-9 + 50 mass % activated carbon fiber H | 89 |

INDUSTRIAL APPLICABILITY

According to the method for producing the gas oil of the present invention, the adsorbent can be subjected to the desorption regeneration to use the adsorbent again for the adsorptive desulfurization after the sulfur content contained in the gas oil is adsorbed and desulfurized. Therefore, the sulfur content can be sufficiently removed for a long period of time at relatively low equipment cost and running cost.

According to the method for producing the gas oil of the present invention, the sulfur compounds and the polycyclic aromatic compounds (with two or more rings) can be selectively removed by using the carbon material, especially the activated carbon fiber for the adsorptive desulfurization agent. Therefore, it is possible to provide the gas oil which is more environment-friendly. Further, according to the method for producing the gas oil of the present invention, DBT compounds, especially 4,6-DMDBT, which are difficult to be desulfurized by the hydrotreating, can be selectively reduced as well. Therefore, when the desulfurization method of the present invention is combined with the hydrotreating, it is possible to refine the gas oil to give a sulfur concentration of not more than 10 ppm and especially a sulfur concentration of not more than 1 ppm.

The adsorption-desulfurized gas oil, which is obtained by the method for producing the gas oil of the present invention, has the 90 % distillation point of the value which is approximately the same as that of the feed gas oil. Therefore, according to the method for producing the gas oil of the present invention, it is possible to produce the gas oil without changing the characteristics of the gas oil itself while reducing the sulfur content contained in the gas oil.

**Claims**

1.   An adsorptive desulfurization agent comprising a carbon material having a specific surface area of not less than 500 $m^2$/g, wherein organic sulfur compounds, which are contained in petroleum distillate products, are adsorbed by the adsorptive desulfurization agent.

2.   The adsorptive desulfurization agent according to claim 1, wherein the carbon material is activated carbon fiber having a specific surface area of not less than 2,000 $m^2$/g and an average length of not less than 100 μm.

3.   The adsorptive desulfurization agent according to claim 1, wherein a micropore specific surface area Smicro ($m^2$/

g), a micropore external pore volume Vext (cm$^3$/g), and a micropore external specific surface area Sext (m$^2$/g) of the carbon material satisfy the following expression:

$$\text{Smicro x 2 x Vext/Sext} > 3.0.$$

4. The adsorptive desulfurization agent according to any one of claims 1 to 3, further containing a zeolite component, wherein the petroleum distillate products are gasoline distillate products.

5. A method for desulfurizing petroleum distillate products, comprising a step of bringing petroleum distillate products containing organic sulfur compounds into contact with an adsorptive desulfurization agent containing a carbon material having a specific surface area of not less than 500 m$^2$/g.

6. The method for desulfurizing the petroleum distillate products according to claim 5, wherein the organic sulfur compounds include 4,6-dimethylbenzothiophene, and a ratio of 4,6-dimethylbenzothiophene to a total sulfur content in the petroleum distillate products is lowered to not more than 10 % by bringing the petroleum distillate products into contact with the adsorptive desulfurization agent.

7. The method for desulfurizing the petroleum distillate products according to claim 5, further comprising a step of desorbing the organic sulfur compounds by heating the adsorptive desulfurization agent in a non-oxidizing atmosphere to regenerate the adsorptive desulfurization agent after the step of bringing the petroleum distillate products into contact with the adsorptive desulfurization agent, and a step of bringing the petroleum distillate products containing the organic sulfur compounds into contact with the regenerated adsorptive desulfurization agent.

8. The adsorptive desulfurization agent according to any one of claims 5 to 7, wherein the petroleum distillate products are gasoline distillate products, and the adsorptive desulfurization agent contains a zeolite component.

9. A method for producing gas oil, comprising:

   an adsorptive desulfurization step of bringing gas oil distillate products in a liquid phase state containing sulfur contents of not more than 500 ppm into contact with an adsorptive desulfurization agent which comprises a carbon material having a specific surface area of not less than 500 m$^2$/g and which adsorbs sulfur compounds contained in the gas oil distillate products; and
   a desorption regeneration step of washing the adsorptive desulfurization agent with an aromatic solvent to regenerate the adsorptive desulfurization agent.

10. The method for producing the gas oil according to claim 9, further comprising a step of hydrotreating a feed gas oil before the adsorptive desulfurization step, wherein the gas oil distillate products in the liquid phase state containing the sulfur contents of not more than 500 ppm are obtained by the hydrotreating step.

11. The method for producing the gas oil according to claim 9 or 10, further comprising a step of recovering the gas oil from the adsorptive desulfurization agent after the adsorptive desulfurization step and before the desorption regeneration step.

12. The method for producing the gas oil according to claim 9 or 10, further comprising a step of removing a desorbent from the adsorptive desulfurization agent after the desorption regeneration step and before the adsorptive desulfurization step.

13. A gas oil wherein a sulfur concentration is not more than 15 ppm, a ratio of sulfur of 4,6-dimethylbenzothiophene to a total sulfur content is not more than 10 %, and a 90 % distillation temperature is not less than 310 °C.

14. A gas oil wherein a sulfur concentration is not more than 15 ppm, a ratio of aromatic compounds having two or more rings to a total aromatic compound content is not more than 7 %, and a 90 % distillation temperature is not less than 310 °C.

15. A gas oil wherein a sulfur concentration is not more than 15 ppm, a ratio of aromatic compounds having three rings to a total aromatic compound content is less than 0.5 %, and a 90 % distillation temperature is not less than 310 °C.

## Fig. 1

PARAFFINIC SOLVENT

FEED GAS OIL

AROMATIC SOLVENT

SULFUR COMPOUNDS

PRODUCT GAS OIL

## Fig. 2

(STEP 1)

(STEP 2)

(STEP 3)

## Fig. 3

(STEP 4)

(STEP 5)

(STEP 6)

Fig. 4

Fig. 5

Fig. 6

**Fig. 7**

Legend:
— · · — DESORBENT
— — — n-DECANE
——— SULFUR CONTENT

Y-axis left: CONCENTRATION / GCwt%
Y-axis right: SULFUR CONTENT / wtppm
X-axis: ACCUMULATED OUTFLOW LIQUID AMOUNT / ml/ml–adsorbents

**Fig. 8**

Legend:
— — — 2nd n-DECANE
— · — · — 2nd GAS OIL
——— 2nd SULFUR
········· 1st SULFUR

Y-axis left: CONCENTRATION / GCwt%
Y-axis right: SULFUR CONTENT / wtppm
X-axis: ACCUMULATED OUTFLOW LIQUID AMOUNT / ml/ml–adsorbents

## Fig. 9

Chromatogram comparing FEED GAS OIL (SULFUR CONTENT: 38ppm) and ADSORPTION-DESULFURIZED GAS OIL (SULFUR CONTENT: 12ppm), with peaks labeled 4−MDBT and 4,6−DMDBT. X-axis: RETENTION TIME /min. from 70 to 90.

## INTERNATIONAL SEARCH REPORT

| International application No. |
| --- |
| PCT/JP03/06336 |

| A. CLASSIFICATION OF SUBJECT MATTER |
| --- |
| Int.Cl$^7$ C10G25/00, C10G67/06, B01J20/20 |

According to International Patent Classification (IPC) or to both national classification and IPC

| B. FIELDS SEARCHED |
| --- |
| Minimum documentation searched (classification system followed by classification symbols) <br> Int.Cl$^7$ C10G25/00, C10G67/06, B01J20/20 |
| Documentation searched other than minimum documentation to the extent that such documents are included in the fields searched |
| Electronic data base consulted during the international search (name of data base and, where practicable, search terms used) |

**C. DOCUMENTS CONSIDERED TO BE RELEVANT**

| Category* | Citation of document, with indication, where appropriate, of the relevant passages | Relevant to claim No. |
| --- | --- | --- |
| X <br> Y <br> A | JP 2001-279257 A (Idemitsu Kosan Co., Ltd.), <br> 10 October, 2001 (10.10.01), <br> Claims; example 3 <br> (Family: none) | 1,5,6 <br> 4,7-15 <br> 2,3 |
| X <br> Y <br> A | JP 2-132186 A (Catalysts and Chemicals Inc., Far East), <br> 21 May, 1990 (21.05.90), <br> Claims; page 2, lower left column, line 20 to lower right column, line 11 <br> (Family: none) | 1,5 <br> 3,6-15 <br> 2,3 |
| Y | JP 2001-279261 A (Idemitsu Kosan Co., Ltd.), <br> 10 October, 2001 (10.10.01), <br> Claims; Par. No. [0006] <br> (Family: none) | 1,4-15 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search <br> 21 August, 2003 (21.08.03) | Date of mailing of the international search report <br> 02 September, 2003 (02.09.03) |
| --- | --- |
| Name and mailing address of the ISA/ <br> Japanese Patent Office | Authorized officer |
| Facsimile No. | Telephone No. |

Form PCT/ISA/210 (second sheet) (July 1998)

32

**EP 1 514 917 A1**

**INTERNATIONAL SEARCH REPORT**

| International application No. |
|---|
| PCT/JP03/06336 |

| C (Continuation). DOCUMENTS CONSIDERED TO BE RELEVANT | | |
|---|---|---|
| Category* | Citation of document, with indication, where appropriate, of the relevant passages | Relevant to claim No. |
| Y | US 2001/20596 A1 (Chevron U.S.A., Inc.), 13 September, 2001 (13.09.01), & EP 1247857 A2 & KR 2002077830 A & JP 2003-20485 A & US 6228254 B1 & US 6475376 B2 | 1,4-15 |
| Y | US 5935422 A (UOP LCC), 10 August, 1999 (10.08.99), (Family: none) | 4,8 |
| Y | US 4865826 A (Imperial Chemical Industries PLC), 12 September, 1989 (12.09.89), & GB 86235771 A & GB 8710804 A & DE 3780742 A & DE 3677945 C & NO 870100 A & JP 62-126520 A & EP 230146 A2 & EP 262849 A2 | 7 |
| Y | WO 98/38265 A1 (EXXON RESEARCH AND ENGINEERING), 03 September, 1998 (03.09.98), Page 10, lines 20 to 28 & EP 970163 A2 & US 5897768 A & JP 2001-513835 A & BR 9807629 A | 9-15 |
| Y | US 6007704 A (INSTITUT FRANCAIS DU PETROL), 28 December, 1999 (28.12.99), & FR 2753717 A1 & EP 832958 A1 & JP 10-102070 A | 10-15 |
| A | WO 86/2629 A1 (Chevron U.S.A., Inc.), 09 May, 1986 (09.05.86), & EP 200783 A1 & NL 8520380 A & GB 2176205 A & DE 3590570 C & JP 62-500728 A & US 4741819 A & US 4925549 A & US 5259946 A & US 5439583 A & US 5518607 A | 1-15 |
| P,Y | JP 2003-49172 A (Kabushiki Kaisha Korona), 21 February, 2003 (21.02.03), (Family: none) | 1,4-15 |

Form PCT/ISA/210 (continuation of second sheet) (July 1998)

33